# EUROPÄISCHE PATENTSCHRIFT

(11) **EP 3 509 781 B1**
(45) Veröffentlichungstag und Bekanntmachung des Hinweises auf die Patenterteilung: **18.01.2023**
(21) Anmeldenummer: 17835580.6
(22) Anmeldetag: 11.09.2017
(51) Int. Cl.: B23B 29/034, B23B 29/02, B23B 41/12

(54) **MEHRSCHNEIDIGES ZERSPANUNGSWERKZEUG UND VERFAHREN ZUM BEARBEITEN EINER LAGERGASSE**
MULTI-EDGED MACHINING TOOL AND METHOD FOR MACHINING A BEARING RACE
OUTIL D'USINAGE PAR ENLÈVEMENT DE COPEAUX MULTI-LAMES ET PROCÉDÉ D'USINAGE D'UNE DEMI-LIGNE

(30) Priorität: 09.09.2016 DE 102016217243
(43) Veröffentlichungstag der Anmeldung: 17.07.2019
(73) Patentinhaber: Gühring KG, 72458 Albstadt (DE)
(72) Erfinder: THANNER, Jürgen, 91161 Hilpoltstein (DE); HOLLFELDER, Hans-Peter, 90768 Fürth (DE)
(74) Vertreter: Winter, Brandl - Partnerschaft mbB
(86) Internationale Anmeldenummer: PCT/DE2017/000291
(87) Internationale Veröffentlichungsnummer: WO 2018/046036

(56) Entgegenhaltungen:
- EP-A1- 1 123 766
- WO-A1-2004/016379
- WO-A1-2008/088629
- DE-A1-102005 028 366
- DE-A1-102011 082 964
- DE-B3-102011 112 952
- US-A- 3 427 904
- US-A1- 2012 028 550

## Beschreibung

Die Erfindung betrifft ein mehrschneidiges Zerspanungswerkzeug gemäß dem Oberbegriff des unabhängigen Anspruchs 1.

Mehrschneidige Zerspanungswerkzeuge werden benötigt, wenn es darum geht, besonders tief im Werkzeug liegende Bohrungen bzw. mehrere axial beabstandete Bohrungen gleicher Durchmesser und Oberflächengüte in einem einzigen Arbeitshub hochpräzise zu bearbeiten. Derartige Werkzeuge werden beispielsweise in der Automobilindustrie dann eingesetzt, wenn es darum geht, die Bohrungen mehrerer in Reihe angeordneter Lagerstege einer Lagergasse zum Lagern einer Welle, beispielsweise einer Kurbelwelle oder Nockenwelle, auf ein Endmaß zu bearbeiten. Das Zerspanungswerkzeug ist mehrschneidig ausgebildet, um mehrere Lagerstege einer Lagergasse synchron bearbeiten zu können.

Beispiele für derartige Zerspanungswerkzeuge sind in der DE 10 2005 028 366 A1, DE 10 2004 052 211 A1, WO 2010/024984 A1 oder WO 2009/005804 A1 angegeben. Diese Zerspanungswerkzeugen weisen einen um eine Drehachse drehantreibbaren Grundkörper und mehrere, am Grundkörper axial in Reihe angeordnete Schneidenträger auf.

In der DE 10 2005 028 366 A1 und DE 10 2004 052 211 A1 wird zum Ausgleich eines Schneidenverschleißes eine individuelle Schneidenjustierung vorgeschlagen, bei der den Schneidenträgern zugeordnete Einstelleinrichtungen durch eine Kopplungseinrichtung mittels einer im Grundkörper axial verschiebbar gelagerten Stellstange verbindbar sind. Die Stellstange kann jedoch nicht dazu genutzt werden, die Schneidenträger synchron in radialer Richtung zwischen einer eingesteuerten Position, in der die von den Schneidenträgern getragenen Schneidelemente auf einem minimalen Durchmesser, beispielsweise auf Höhe oder innerhalb des Außenumfangs des Grundkörpers, liegen, und einer ausgesteuerten Position, in der die Schneidelemente auf einem vorgegeben Nenndurchmessermaß liegen, zu verstellen.

Im Unterschied dazu wird in der WO 2010/024984 A1 und WO 2009/005804 A1 vorgeschlagen, mittels einer im Grundkörper axial verschiebbar gelagerten Stellstange die Schneidenträger synchron radial einzusteuern, um das Zerspanungswerkzeug in eine Lagergasse einfahren zu, und dann die Schneidenträger synchron radial auszusteuern, um die Lagerstege bearbeiten zu können. Die WO 2010/024984 A1 und WO 2009/005804 A1 befassen sich dagegen nicht mit einer Möglichkeit zum Ausgleich eines Schneidenverschleißes.

Die US 2012/0028550 A1, die ein Zerspanungswerkzeug gemäß dem Oberbegriff des Anspruchs 1 offenbart, zeigt ein Bohrbearbeitungswerkzeug, das einen Werkzeughalter, eine Zugstange mit kegelförmiger Außenkontur und drei um den Werkzeughalter herum angeordnete und jeweils mit einer Schraube am Werkzeughalter befestigte Arme aufweist. Jeder Arm trägt ein Schneidwerkzeug und ist über eine Einstellschraube, die in eine Gewindebohrung im Arm eingeschraubt ist, über einen Stift an der Zugstange abgestützt. Ein axiales Verschieben der Zugstange bewirkt, dass der über die Einstellschraube und den Stift an der kegelförmigen Außenkontur der Zugstange abgestützte Arm und damit das Schneidwerkzeug radial verstellt werden können.

Die EP 1 123 766 A1 zeigt ein Bohrwerkzeug mit einem gegenüber einem Grundkörper des Bohrwerkzeugs radial einstellbaren Schneidenträger. Die radiale Einstellung des Schneidenträgers erfolgt über ein Stellelement in Form einer mit dem Schneidenträger verschraubten Einstellschraube, die vom Schneidenträger auskragt und über eine Nachführstange an einer im Grundkörper verschiebbaren Zugstange abgestützt ist.

Die DE 10 2005 028 366 A1 zeigt eine Bohrstange mit mehreren Schneidenträgern und Schneiden, wobei in der Bohrstange zur radialen Verstellung der Schneidenträger bzw. Schneiden eine Druckstange verschiebbar geführt ist.

Ausgehend von dem oben diskutierten Stand der Technik liegt der Erfindung die Aufgabe zugrunde, ein mehrschneidiges Zerspanungswerkzeugs bereitzustellen, bei dem einerseits mehrere Schneidenträger synchron radial ein- und aussteuerbar sind und andererseits zum Ausgleich eines Schneidenverschleißes von den Schneidenträgern getragene Schneidelement individuell im µm-Bereich justierbar sind.

Diese Aufgabe wird durch ein Zerspanungswerkzeug mit den Merkmalen des Anspruchs 1 gelöst . Vorteilhafte oder bevorzugte Weiterbildungen sind jeweils Gegenstand abhängiger Ansprüche.

Ein erfindungsgemäßes mehrschneidiges Zerspanungswerkzeug wird bevorzugt zur Bohrungsnachbearbeitung oder Bohrungsfeinbearbeitung, im Besonderen einer sogenannten Lagergasse eingesetzt. Derartige Werkzeuge werden beispielsweise in der Automobilindustrie dann eingesetzt, wenn es darum geht, die Bohrungen mehrerer in Reihe angeordneter Lagerstege einer Lagergasse zum Lagern einer Welle, beispielsweise einer Kurbelwelle oder Nockenwelle, auf ein Durchmesserendmaß zu bearbeiten. Das Zerspanungswerkzeug mehrschneidig ausgebildet, um mehrere Lagerstege einer Lagergasse synchron bearbeiten zu können, so dass am Grundkörper des Zerspanungswerkzeugs mehrere Schneidenträger in den Abständen der Lagerstege entsprechenden axialen Abständen, vorzugsweise in einer Reihe, angeordnet sind. Das Zerspanungswerkzeug weist hierzu einen um eine Drehachse drehantreibbaren Grundkörper, mehrere, am Grundkörper axial versetzt, vorzugsweise in einer Reihe, angeordnete Schneidenträger, wobei jeder Schneidenträger einen Trägerkörper aufweist, der wenigstens ein Schneidelement trägt, und eine im Grundkörper axial verschiebbar gelagerte Stellstange auf, an der die Schneidenträger radial verstellbar abgestützt sind. Erfindungsgemäß weist jeder Schneidenträger eine in den Trägerkörper integrierte Justiereinrichtung auf, die mit einem im Trägerkörper verschiebbar geführten und vom Trägerkörper radial auskragenden Stellelement zusammenwirkt, das an der Stellstange abgestützt ist.

Jeder Schneidenträger kann als eine Kassette oder als ein Klemmhalter, im Besonderen als ein Kurzklemmhalter, ausgestaltet sein und wenigstens ein Schneidelement aufnehmen und tragen. Erfindungsgemäß weist jeder Schneidenträger hierzu einen vorzugsweise aus einem prismatischen oder quaderförmigen Block gefertigten Trägerkörper auf, an dem wenigstens ein Sitz zur Aufnahme eines Schneidelements, im Besonderen einer Schneidplatte, vorzugsweise einer Wendeschneidplatte, vorgesehen ist. Das Schneidelement kann in dem am Trägerkörper vorgesehenen Sitz lageeinstellbar, z.B. durch Verschraubung, Klemmung, etc., oder lagefest, z.B. durch Kleben oder Löten, aufgenommen sein.

Des Weiteren ist jeder Schneidenträger an der im Grundkörper des Zerspanungswerkzeugs axial verschiebbar angeordneten Stellstange in der Weise im Wesentlichen radial abgestützt, dass er zur Nachstellung des am Trägerkörper gehaltenen Schneidelements relativ zum Grundkörper radial ein- und aussteuerbar, d.h. radial nach innen und außen verstellbar, ist. Hierzu kann der Trägerkörper in der Art eines Biegebalkens am Grundkörper elastisch verformbar oder aber in der Art einer Wippe am Grundkörper schwenkbar angeordnet sein. Insbesondere kann vorgesehen sein, dass der Schneidenträger mit dem am Trägerkörper gehaltenen Schneidelement durch die Stellstange in radialer Richtung zwischen einer eingesteuerten Position, in der das am Schneidenträger gehaltene Schneidelement auf einem minimalen Durchmesser bezüglich einer Dreh- oder Längsmittelachse des Grundkörpers liegt, in radialer Richtung beispielsweise in einem definierten (geringen) Abstand außerhalb, auf Höhe oder innerhalb des Außenumfangs des Grundkörpers, und einer ausgesteuerten Position, in der das am Schneidenträger gehaltene Schneidelement auf einem maximalen Radius, d.h. auf einem vorgegeben Nenndurchmessermaß bezüglich der Dreh- oder Längsmittelachse des Grundkörpers liegt, d.h. in einem (großen) radialen Abstand über dem Außenumfang des Grundkörpers, radial verstellbar sein.

Ungeachtet dessen soll erfindungsgemäß zum Ausgleich eines Schneidenverschleißes eine individuelle Schneidenfeinjustierung im µm-Bereich möglich sein. Hierzu wird vorgeschlagen, in den Trägerkörper des Schneidenträgers eine Justiereinrichtung zu integrieren, die erfindungsgemäß mit einem im Trägerkörper verschiebbar geführten Stellelement zusammenwirkt, das zur Abstützung an der Stellstange im Grundkörper des Zerspanungswerkzeugs vom Trägerkörper auskragt. Das Stellelement kann im Besonderen über eine Ausnehmung oder Öffnung im Trägerkörper auf einer vom Schneidelement abgewandten Seite des Trägerkörpers auskragen. Das Stellelement kann in Form eines Stößels, Stifts, Bolzens oder, wie später noch erläutert wird, in Form einer Nase ausgebildet sein, die von einer im Trägerkörper verschiebbar geführten Gewindehülse seitlich auskragt. Entscheidend ist lediglich, dass sich der Schneidenträger mit dem am Trägerkörper gehaltenen Schneidelement über das Stellelement an der im Grundkörper axial verschiebbar angeordneten Stellstange in der Weise abstützen kann, dass eine Verschiebung des Stellelements eine radiale Schneidenjustierung relativ zum Grundkörper erlaubt.

Durch die im Trägerkörper aufgenommene Justiereinrichtung kann somit eine Verschiebung des Stellelements im und relativ zum Trägerkörper des Schneidenträgers erreicht werden. Über das sich an der Stellstange abstützende Stellelement kann der Trägerkörper mit dem Schneidelement relativ zum Grundkörper des Zerspanungswerkzeugs zur Schneidenjustierung beispielsweise aufgrund eines Verschleißes oder bei einer Neumontage radial verstellt werden.

Durch das sich an der Stellstange abstützende Stellelement wird also eine Schneidenfeinjustierung durch eine radiale Verstellung des gesamten Schneidenträgers relativ zum Grundkörper ermöglicht. Davon unabhängig kann der Schneidenträger selbstverständlich über weitere Möglichkeiten für eine zusätzliche Lageeinstellung des Schneidelements am Trägerkörper verfügen.

Durch einen erfindungsgemäßen Schneidenträger kann also beispielsweise ein mit einer Stellstange im Grundkörper versehenes Zerspanungswerkzeug so weitergebildet werden, dass sich für die Schneideneinstellung wenigstens zwei voneinander unabhängige Möglichkeiten ergeben. Einerseits kann über die in den Schneidenträger integrierte Justiereinrichtung die radiale Lage des sich über das Stellelement an der Stellstange abstützenden Schneidenträgers fein justiert werden. In diesem Fall kann beispielsweise vorgesehen sein, dass die Feinjustierung des Schneidenträgers dann durchgeführt wird, wenn der Schneidenträger über das Stellelement an einer einen maximalen Durchmesser der Stellstange definierenden Stelle, vorzugsweise an einem Zylinderabschnitt, abgestützt ist, so dass ein von dem so justierten Schneidenträger getragenes Schneidelement auf einem gewünschten Nenndurchmesser liegt. Wenn die Stellstange im Anschluss an den oben erwähnten Zylinderabschnitt eine Durchmesserverjüngung aufweist, vorzugsweise in Form eines an den Zylinderabschnitt anschließenden Kegelabschnitts, kann durch eine axiale Verschiebung der Stellstange erreicht werden, dass der bereits justierte Schneidenträger durch das sich an der Durchmesserverjüngung der Stellstange abstützende Stellelement radial eingesteuert, d.h. radial nach innen verstellt wird, beispielsweise um das Zerspanungswerkzeug in eine zu bearbeitende Bohrung einzufahren, ohne dass das vom Schneidenträger getragene Schneideelement mit der zu bearbeitenden Bohrungswand in Kontakt kommt. Anschließend kann der Schneidenträger wieder radial ausgesteuert, d.h. radial nach außen verstellt, werden, indem die Stellstange in eine Richtung verschoben wird, in der das Stellelement auf den oben erwähnten Zylinderabschnitt aufläuft, wodurch das am Schneidenträger getragene Schneidelement wieder auf den zuvor justierten Nenndurchmesser gebracht und eine Bohrung bearbeitet werden kann.

Die Justiereinrichtung kann verschieden ausgeführt sein, solange sie zum Zweck der gewünschten Schneidenfeinjustierung eine dementsprechend feine Verschiebung des Stellelements im bzw. relativ zum Trägerkörper des Schneidenträgers ermöglicht.

Durch die Integration der Justiereinrichtung in den Trägerkörper wird ein kompakt aufgebauter Schneidenträger erhalten, der sich mit der integrierten Justiereinrichtung und bei entsprechender verliersicherer Festlegung des Stellelements im Trägerkörper als eine austauschbare Komponente handhaben und am Grundkörper eines Zerspanungswerkzeugs anordnen lässt.

Die Abstützung des Stellelements an einer im Grundkörper verschiebbar angeordneten Stellstange gelingt dann besonders einfach, wenn die Verschieberichtung des Stellelements im Wesentlichen quer zur Auskragrichtung des Stellelements orientiert ist. In diesem Fall kann der Schneidenträger am Grundkörper eines Zerspanungswerkzeugs so angeordnet werden, dass das Stellelement im Wesentlichen radial an der Stellstange abgestützt und die Justiereinrichtung vom Außenumfang des Grundkörpers her, beispielsweise quer zur Dreh- oder Längsmittelachse des Zerspanungswerkzeugs, betätigbar ist und das Stellelement im Wesentlichen quer zur Dreh- oder Längsmittelachse verschiebt. Durch die umfangsseitige Betätigung lässt sich die axiale Baulänge des Schneidenträgers klein halten, was die Anordnung am Grundkörper eines mehrschneidigen Lagergassenwerkzeugs erleichtert. Für die im µm-Bereich angestrebte Feinjustierung des am Schneidenträger gehaltenen Schneidelements gegenüber dem Grundkörper des Zerspanungswerkzeugs, die beispielsweise im Bereich von 0,2 mm liegt, ist nur ein sehr kurzer Verschiebeweg des Stellelements erforderlich, der sich in einer Richtung quer zur Dreh- oder Längsmittelachse des Zerspanungswerkzeugs ohne weiteres sicherstellen lässt.

Vorteilhaft ist hierzu, wenn das Stellelement in seiner Auskragrichtung relativ zum Trägerkörper unverschiebbar, d.h. lagefest, angeordnet ist, das Stellelement also nur geradlinig in Verschieberichtung verschiebbar ist. Durch die Einschränkung der Bewegungsmöglichkeiten auf eine geradlinige Bewegung wird die Ausbildung einer das Stellelement führenden Führungsausnehmung im Trägerkörper vereinfacht.

Im Hinblick auf die Abstützung an der im Grundkörper verschiebbar angeordneten Stellstange weist das Stellelement auf seiner vom Trägerkörper abgewandten Stirnseite vorzugsweise eine in einem schiefen Winkel zur Verschieberichtung des Stellelements liegende Keilfläche auf. Die stirnseitige Druckfläche des Stellelements kann mit einer Steuerfläche an der Stellstange ein Keilflächengetriebe bilden, über das bei einer Betätigung der Justiereinrichtung die gewünschte Feinjustierung des Schneidenträgers und damit des am Schneidenträger gehaltenen Schneidelements relativ zum Grundkörper ermöglicht wird.

Um durch Verunreinigungen oder Ungenauigkeiten bedingte Justierfehler so gering als möglich zu halten, wird vorteilhaft eine Punktanlage des Stellelements am Grundkörper, also beispielsweise der Stellstange, angestrebt. Eine Punktanlage lässt sich besonderes einfach durch runde Flächen erreichen. Hierzu können die Keilfläche am Stellelement und/oder die gegenüberliegende Steuerfläche an der Stellstange beispielsweise abgerundet sein.

Eine besonders feine Justierung im µm-Bereich gelingt beispielsweise dadurch, dass die Justiereinrichtung eine Differentialgewindespindel und eine Gewindehülse aufweist, die Gewindehülse im Trägerkörper vorzugsweise in Verschieberichtung des Stellelements verschiebbar angeordnet ist und das Stellelement in Verschieberichtung mitnimmt, und die Differentialgewindespindel mit einem ersten Gewindeabschnitt in der Gewindehülse und mit einem zweiten Gewindeabschnitt im Trägerkörper verschraubt ist. Der erste Gewindeabschnitt und zweite Gewindeabschnitt können verschiedene Gewindesteigungen (Ganghöhen), aber gleiche Gewinderichtungen (Gangrichtungen) aufweisen. Bei einer Betätigung der Differentialgewindespindel bewegt sich die Gewindehülse in Richtung der Spindelachse daher um eine Strecke, die dem Steigungsunterschied der beiden Gewindeabschnitte der Differentialgewindespindel entspricht. Die Gewindesteigungen können so festgelegt sein, dass sich die Differentialgewindespindel für die gewünschte Schneidenfeinjustierung im Bereich von 0,2 µm um 4 mm in Richtung der Spindelachse schraubt.

Wenn die Achse der Differentialgewindespindel dabei parallel zur Verschieberichtung des Stellelements ausgerichtet ist, wird die Drehbewegung der Differentialgewindespindel in eine geradlinige Verschiebung des Stellelements in Richtung der Spindelachse gewährleistet. Weil die Bewegungsrichtung der Gewindehülse in diesem Fall mit der Verschieberichtung des Stellelements übereinstimmt, können die Gewindehülse und das Stellelement beispielsweise aus einem Stück gefertigt sein. In diesem Fall kann die Gewindehülse des Weiteren im Trägerkörper vorzugsweise durch einen Formschluss mit den die Führungsausnehmung begrenzenden Seitenwänden drehfest geführt sein. Der Trägerkörper des Schneidenträgers kann hierzu beispielsweise eine sich in Richtung der Spindelachse erstreckende, im Querschnitt im Wesentlichen quadratische oder rechteckige Führungsausnehmung aufweisen, die die Gewindehülse mit einer definierten Spielpassung formschlüssig aufnimmt und führt. Die Öffnung im Trägerkörper, aus der das Stellelement auskragt, mündet dabei in die Führungsausnehmung für die Gewindehülse.

Die oben erwähnte Drehbetätigung der Differentialgewindespindel wird beispielsweise durch ein am Trägerkörper axialfest, aber drehbeweglich angeordnetes Betätigungselement erreicht, das mit der Differentialgewindespindel drehfest, aber axial beweglich verbunden ist. Die Drehbetätigung des Betätigungselements kann über einen sogenannten Skalenschlüssel bewerkstelligt werden. Hierzu kann das Betätigungselement ein an den Skalenschlüssel angepasstes Mehrkant- oder Mehrzahn-Mitnahmeprofil aufweisen.

Die im Trägerkörper vorgesehene Gewindebohrung, in die sich die Differentialgewindespindel bei einer Drehbetätigung schraubt, ist aus herstellungstechnischen Gründen vorzugsweise nicht unmittelbar im Trägerkörper, sondern in einer im Trägerkörper festgelegten Gewindebuchse ausgebildet.

Wie oben schon angedeutet kann der Schneidenträger neben der im Trägerkörper integrierten Justiereinrichtung, die eine Feinjustierung des Schneidenträgers insgesamt gegenüber dem Grundkörper eines Zerspanungswerkzeugs ermöglicht, über eine weitere, von dieser Justiereinrichtung unabhängige Einstelleinrichtung verfügen, die im Trägerkörper integriert ist, aber lediglich zur Einstellung eines im Sitz angeordneten Schneidelements relativ zum Trägerkörper dient. Diese Einstelleinrichtung kann einen Exzenterbolzen-, Gewindekeil- oder Kegelschrauben-Verstellmechanismus aufweisen, der unmittelbar mit dem im Sitz aufgenommenen Schneidelement zusammenwirkt.

Das erfindungsgemäße Zerspanungswerkzeug bietet daher wenigstens zwei voneinander unabhängige Möglichkeiten für eine radiale Schneidenverstellung. Gerade bei einer Lagergasse müssen sämtliche Lagerstege im Durchmesser sehr präzise und mit einer hohen Fluchtgenauigkeit gefertigt werden. Jeder erfindungsgemäß gestaltete Schneidenträger gewährleistet die hierzu erforderliche individuelle Feinjustierung der Schneiden im µm-Bereich. Davon unabhängig können die Schneidenträger über die Stellstange in radialer Richtung verstellt werden. Die sich durch eine axiale Verschiebung der Stellstange zusätzlich ergebende Steuermöglichkeit kann dann dazu genutzt werden, die an der Stellstange abstützenden Schneidenträger synchron relativ zum Grundkörper des Zerspanungswerkzeugs radial ein- oder auszusteuern, d.h. die Schneidenträger jeweils in radialer Richtung zwischen einer eingesteuerten Position, in der die Schneidelemente jeweils auf einem minimalen Durchmesser, beispielsweise in einem definierten (geringen) Abstand außerhalb, auf Höhe oder radial innerhalb des Außenumfangs des Grundkörpers, liegen, und einer ausgesteuerten Position, in der die Schneidelemente auf dem vorgegeben Nenndurchmessermaß liegen, zu verstellen. In dem eingesteuerten Zustand kann das Zerspanungswerkzeug dann geradlinig, beispielsweise zentrisch, in eine zu bearbeitende Lagergasse eingefahren werden, ohne dass die Schneidelemente mit der zu bearbeitenden Lagerbohrung in Berührung kommen. Durch eine anschließende durch eine axiale Verschiebung der Stellstange durchgeführte synchrone radiale Aussteuerung der Schneidenträger können dann die Lagerstege der Lagergasse auf den gewünschten Nenndurchmesser bearbeitet werden.

Eine einfache Verstellung der Schneidenträger gelingt dadurch, dass jeder Schneidenträger in der jeweiligen Aufnahmetasche des Grundkörpers um eine quer zur Drehachse des Werkzeugs ausgerichtete Schwenkachse schwenkbar angeordnet ist. Das oben erwähnte radiale Ein- und Aussteuern jedes Schneidenträgers erfolgt dann durch eine Schwenkbewegung des Schneidenträgers am Grundkörper, die besonders einfach dann gelingt, wenn die Schwenkachse des Schneidenträgers im Wesentlichen parallel zur Verschieberichtung des Stellelements des Schneidenträgers und insbesondere quer zur Dreh- oder Längsmittelachse des Zerspanungswerkzeugs ausgerichtet ist.

Dabei kann der Trägerkörper einen um die Schwenkachse schwenkbar gelagerten zweiseitigen Hebel bilden, wobei die im Schneidenträger integrierte Justiereinrichtung und eine Spannschraube, die zur Befestigung des Schneidenträgers am Grundkörper dient, auf verschiedenen Seiten der Schwenkachse angeordnet sein können. Der Trägerkörper weist in diesem Fall einen ersten Hebelarm, an dem das Schneidelement und das Stellelement angeordnet sind, und einen zweiten Hebelarm auf, an dem die Spannschraube angreift. Der Spannschraube ist vorteilhaft eine am Grundkörper des Zerspanungswerkzeugs abzustützende Druckfeder zugeordnet, die den zweiten Hebelarm mit einer Federkraft beaufschlägt und dadurch den Trägerkörper um die Schwenkachse so verdreht, dass das Stellelement in Richtung Grundkörper gedrückt wird.

In einer bevorzugten Weiterbildung ist der Schneidenträger in der Aufnahmetasche des Grundkörpers abgedichtet aufgenommen. Hierzu kann zwischen dem Schneidenträger und dem Grundkörper, beispielsweise einer am Grundkörper festgelegten Einfassung, eine Dichtung angeordnet sein, die ein für die radiale Einstellbarkeit des Schneidenträgers relativ zum Grundkörper erforderliches seitliches Spiel abdichtet. Durch die Abdichtung wird der Eintritt von Schmutzpartikeln etc. verhindert, was eine µ-genaue Einstellung gewährleistet.

Mit dem erfindungsgemäßen Zerspanungswerkzeug kann eine Lagergasse mit mehreren, axial in Reihe angeordneten Lagerstege auf einen vorgegebenen Nenndurchmesser, in folgenden Schritten fertigbearbeitet werden:
Positionieren des Zerspanungswerkzeugs außerhalb der Lagergasse so, dass die Drehachse mit der Achse der Lagergasse fluchtet;
nach innen Verstellen aller Schneidenträger in die eingesteuerte Stellung,
geradliniges Einfahren des Zerspanungswerkzeugs in die Lagergasse,
nach außen Verstellen aller Schneidenträger in die ausgesteuerte Stellung,
geradliniges Verfahren des drehangetriebenen Zerspanungswerkzeugs um einen vorgegebenen axialen Weg und spanabhebendes Bearbeiten der Lagerstege auf den vorgegebenen Nenndurchmesser,
nach innen Verstellen aller Schneidenträger, und
geradliniges Ausfahren des Zerspanungswerkzeugs aus der Lagergasse.

Die radiale Verstellung der Schneidenträger erfolgt dabei durch eine axiale Verscheibung der im Grundkörper des Zerspanungswerkzeugs angeordneten Stellstange, die zu diesem Zweck fluiddisch, hydraulisch, pneumatisch, elektromotorisch oder elektromagnetisch angetrieben werden kann.

Im Anschluss an die Bearbeitung der Lagerstege können die Bohrungen der spanabhebend bearbeiteten Lagerstege auf Nenndurchmessermaßhaltigkeit überprüft werden. Für den Fall, dass bei einer oder mehreren der Lagerstege festgestellt wird, dass der Bohrungsdurchmesser von dem vorgegebenen Nenndurchmesser abweicht, kann der jeweilige Schneidenträger bzw. können die jeweiligen Schneidenträger, die einen Lagersteg auf einen von dem vorgegebenen Nenndurchmesser abweichenden Durchmesser bearbeitet hat bzw. haben, mittels der jeweiligen Justiereinrichtung so nachjustiert werden, dass die Nenndurchmessermaßhaltigkeit bei der nächsten Bearbeitung gegeben ist.

Dank der in die Schneidenträger integrierten Justiereinrichtungen lassen sich daher alle Schneidenträger bei Bedarf individuell nachjustieren und zwar ohne, dass das Zerspanungswerkzeug von der Werkzeugmaschinenspindel getrennt werden müsste. Damit lassen sich Maßschwankungen vermeiden, die auf einen Wechsel oder Ausbau des Zerspanungswerkzeugs zurückgehen könnten.

Im Folgenden werden mit Hilfe der beigefügten Zeichnungen eine bevorzugte Ausführungsform eines erfindungsgemäßen mehrschneidigen Zerspanungswerkzeugs und ein Verfahren beschrieben. Es zeigt:
FIG. 1 eine Seitenansicht des Zerspanungswerkzeugs;
FIG. 2 eine Seitenansicht des Zerspanungswerkzeugs in FIG. 1 in einem in einer Lagergasse eingefahren Zustand;
FIG. 3 eine Seitenansicht des Zerspanungswerkzeugs in einem gegenüber der Seitenansicht der FIG. 2 um 90° nach oben gedrehten Zustand;
FIG. 4 einen Längsschnitt des Zerspanungswerkzeugs in FIG. 2;
FIG. 5 einen Querschnitt des Zerspanungswerkzeugs gemäß V-V in FIG. 3;
FIG. 17 eine Vorderansicht des Zerspanungswerkzeugs;

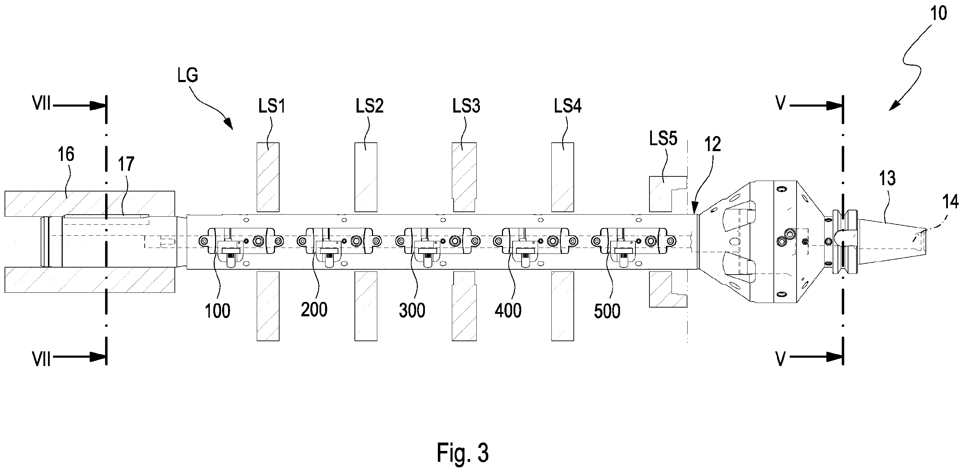

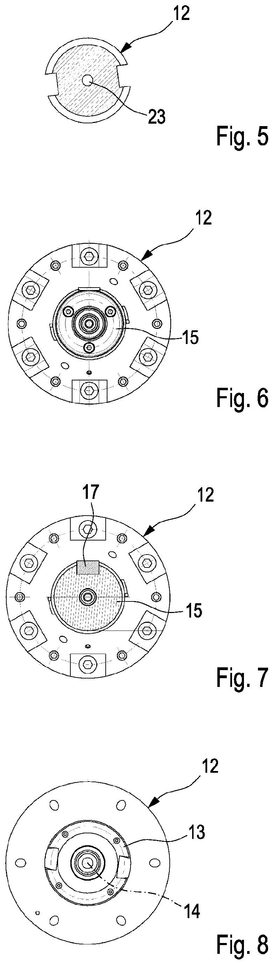

FIG. 7 einen Querschnitt des Zerspanungswerkzeugs gemäß VII-VII in FIG. 3;
FIG. 8 eine Rückansicht des Zerspanungswerkzeugs;

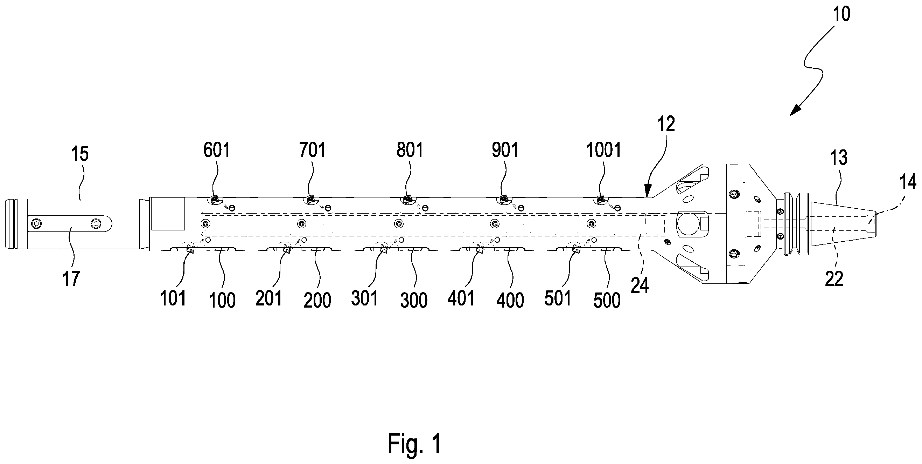

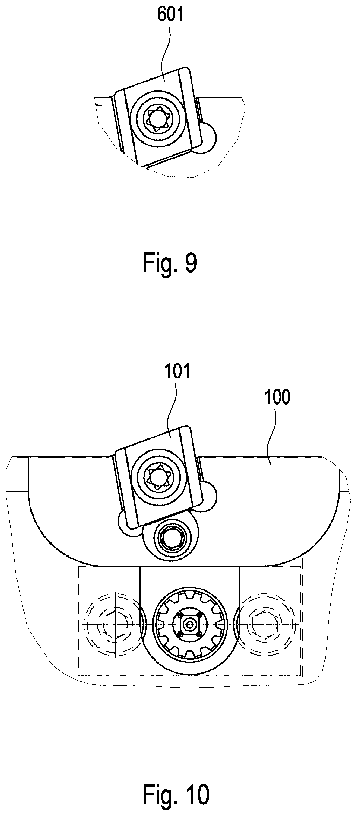

FIG. 9 eine in FIG. 1 mit Y Vorbearbeitungsschneidplatte;

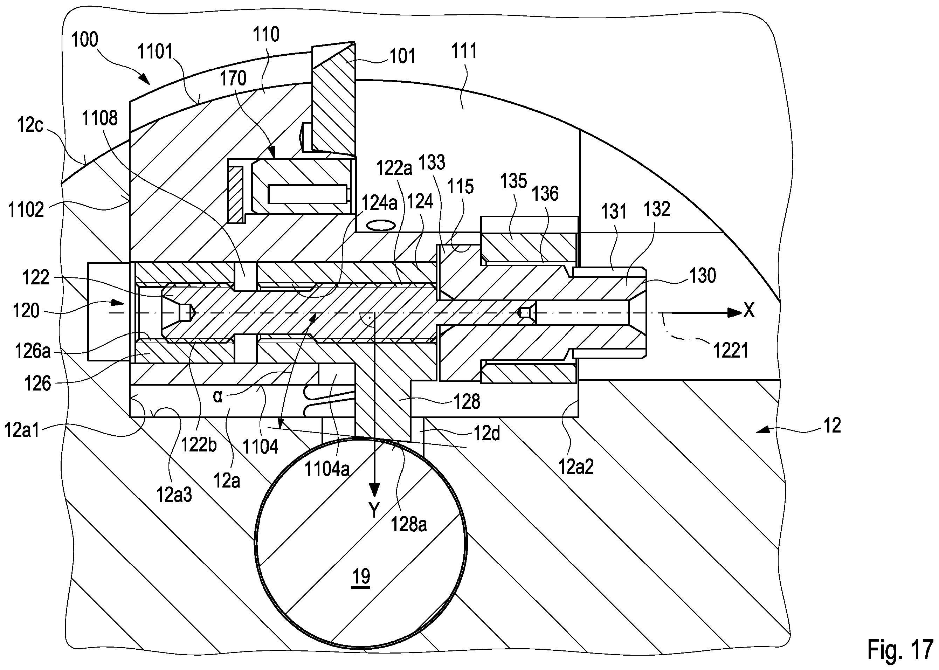

FIG. 10 eine in FIG. 17 in Richtung X zu sehende Endbearbeitungsschneidplatte;

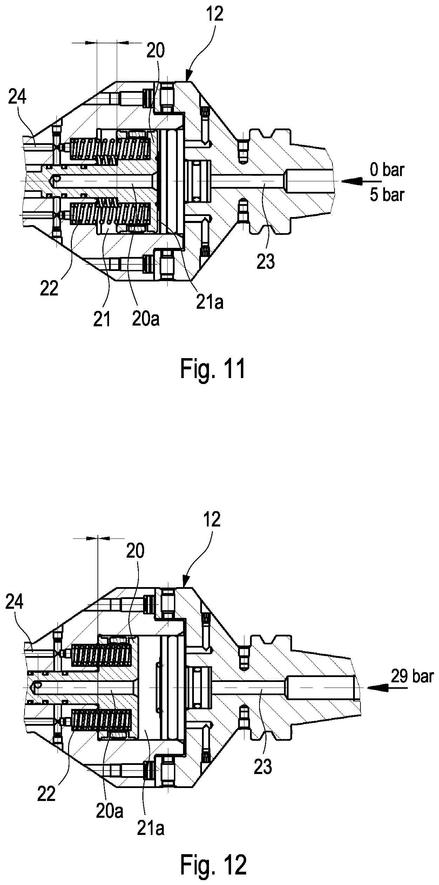

FIG. 11 einen Längsschnitt durch einen einen Kolben aufnehmenden Teil des Grundkörpers in einem Zustand ohne Kolbenhub;
FIG. 12 einen Längsschnitt durch den den Kolben aufnehmenden Teil des Grundkörpers in einem Zustand mit Kolbenhub;

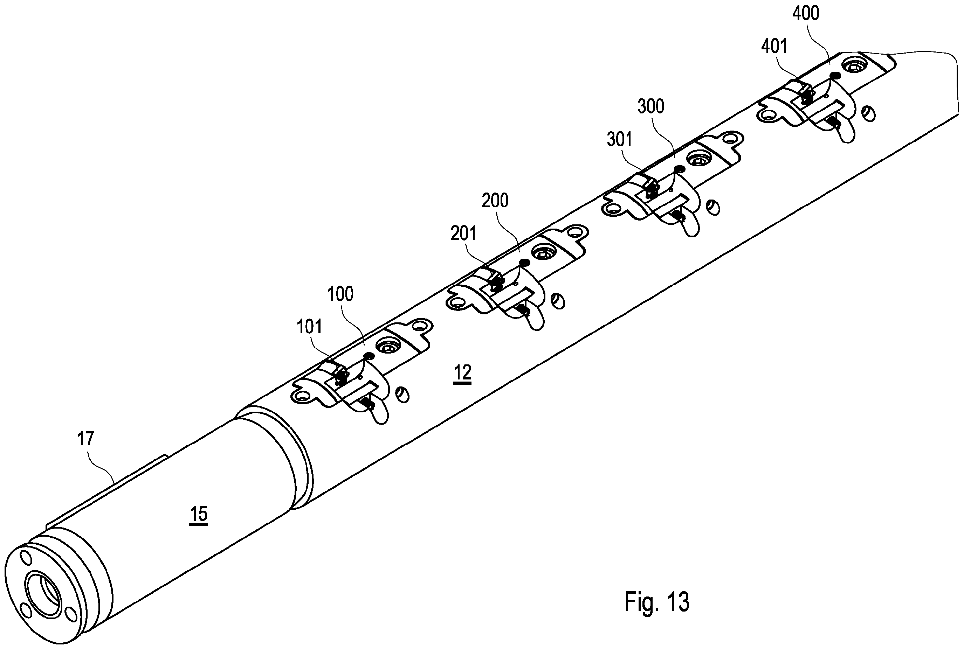

FIG. 13 eine perspektivische Draufsicht eines vorderen Längenabschnitts des Zerspanungswerkzeugs in einem größeren Maßstab;

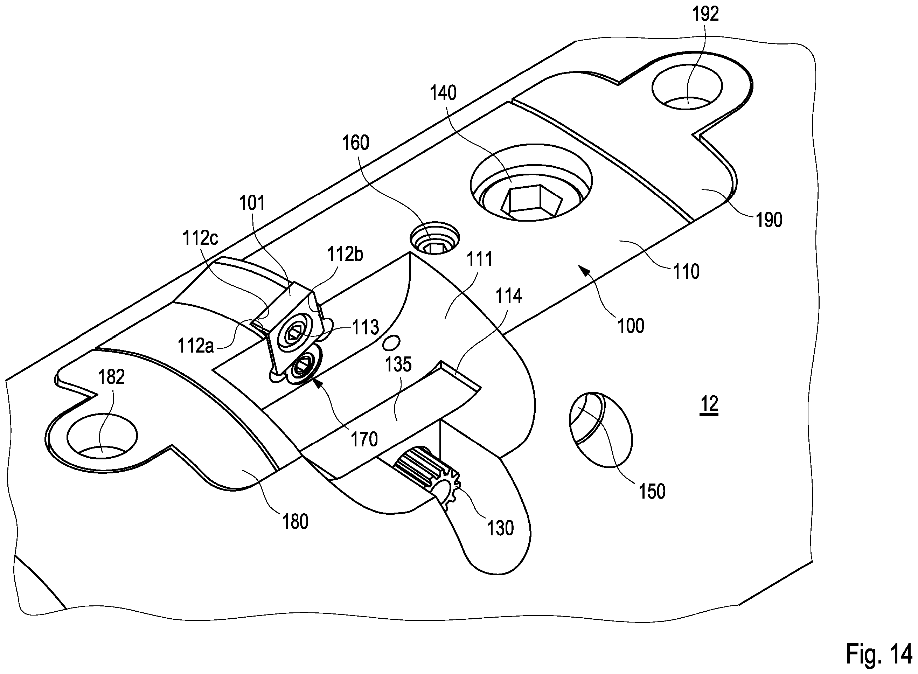

FIG. 14 eine perspektivische Draufsicht eines Teils des vorderen Längenabschnitts mit einem Schneidenträger in einem größeren Maßstab;

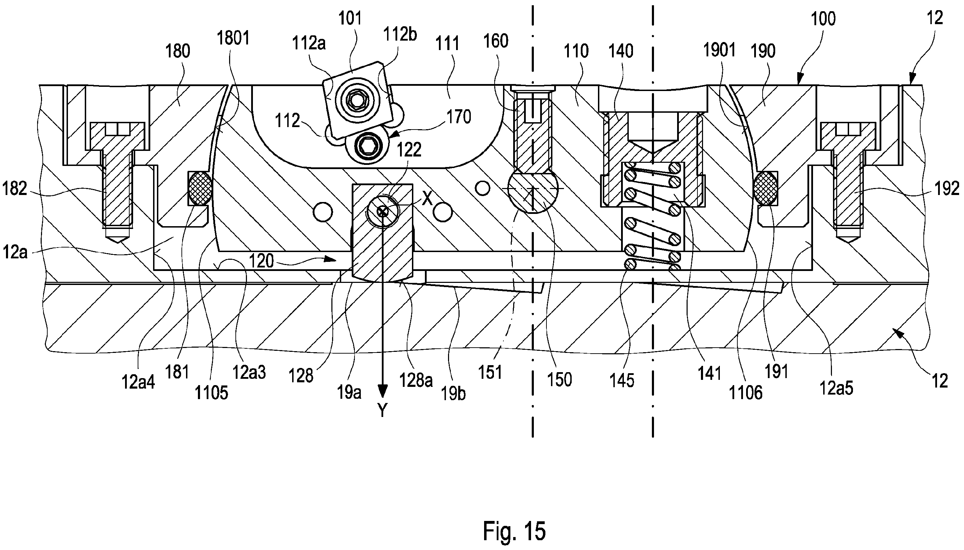

FIG. 15 einen Längsschnitt des Teils in FIG. 14;

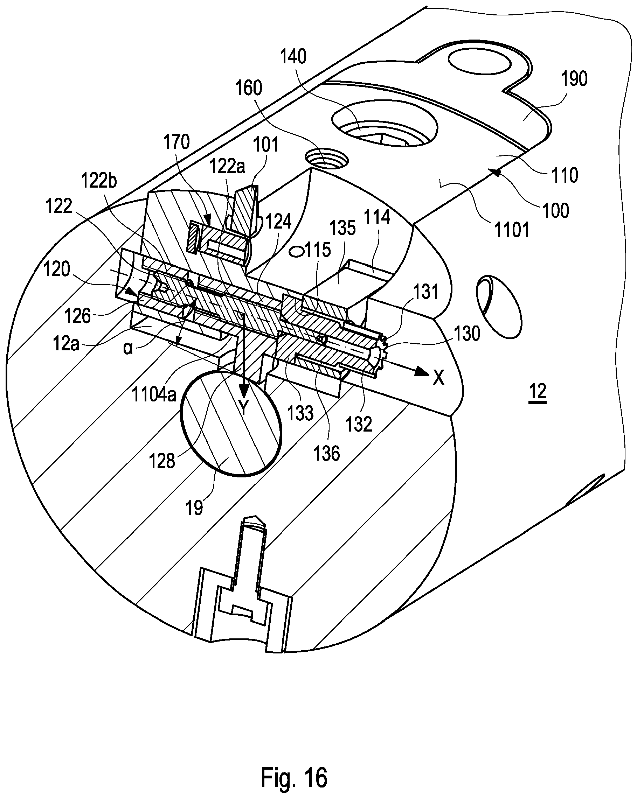

FIG. 16 einen perspektivischen Querschnitt des Teils in FIG. 14;
FIG. 17 den Querschnitt des Längenabschnittteils mit dem Schneidenträger;

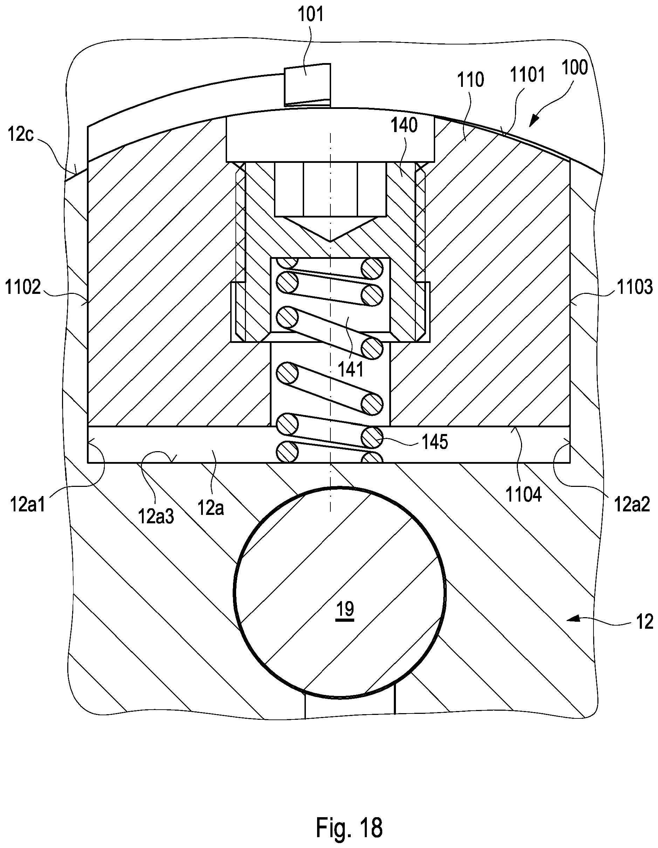

FIG. 18 einen Querschnitt gemäß "XVIII-XVIII" in FIG. 15 in einem größeren Maßstab;

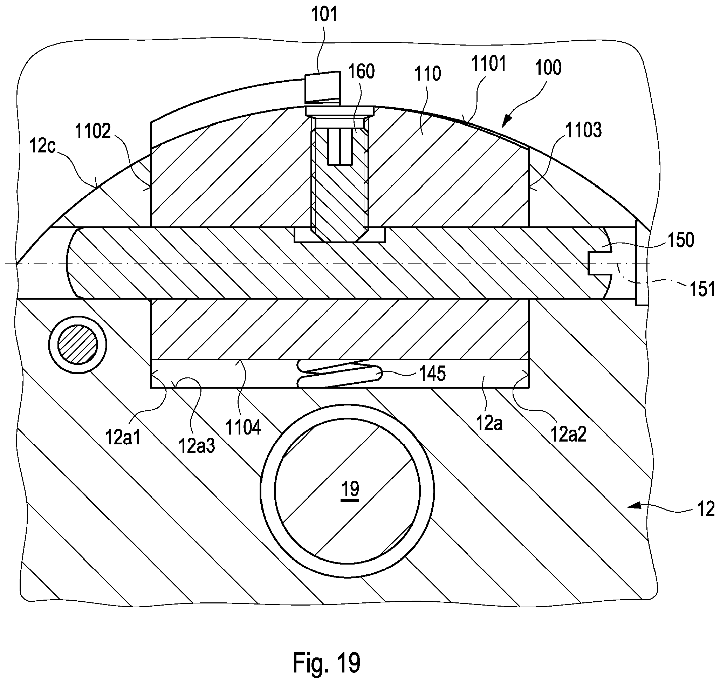

FIG. 19 einen Querschnitt gemäß "XIX-XIX" in FIG. 15 in einem größeren Maßstab;

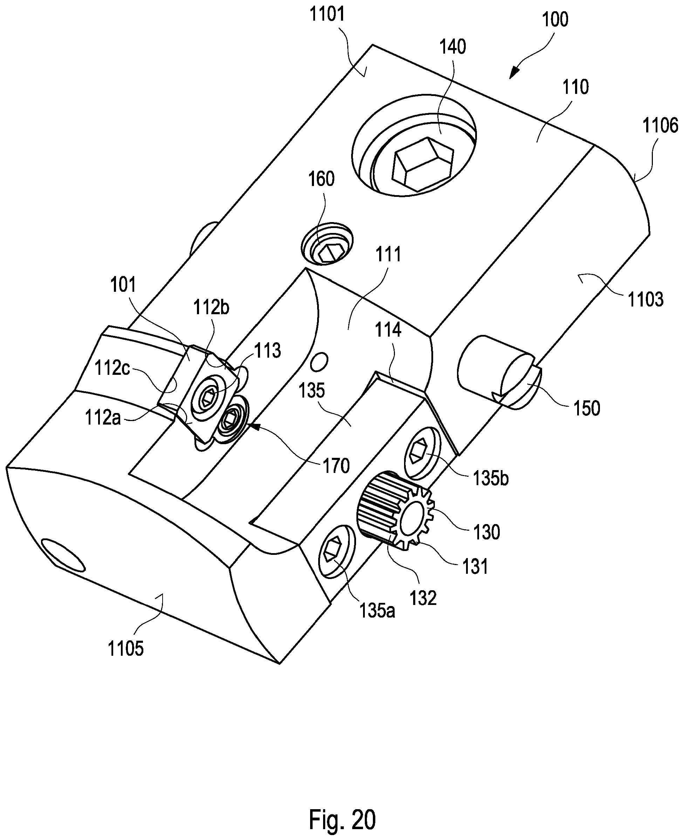

FIG. 20 eine perspektivische Draufsicht des Schneidenträgers; und

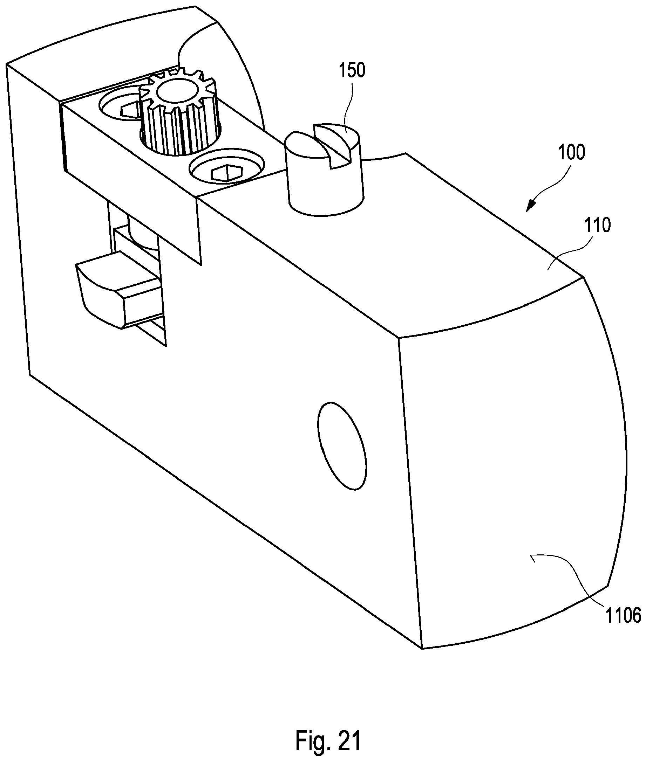

FIG. 21 eine perspektivische Rückansicht des Schneidenträgers.

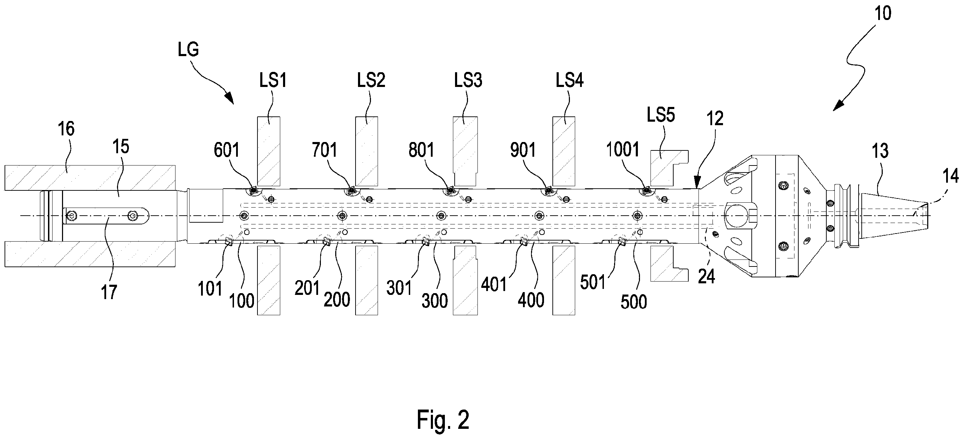

Die FIG. 1 zeigt in einer Seitenansicht ein mehrschneidiges Zerspanungswerkzeugs 10, das für eine Lagergassenbearbeitung eingesetzt wird. Die FIG. 2 bis 4 zeigen eine Seitenansicht bzw. einen Längsschnitt des Zerspanungswerkzeugs 10 in eine Lagergasse LG eingefahrenen Zustand. Die in FIG. 2 bis 4 skizzierte Lagergasse LG weist in der gezeigten Ausführungsform fünf Lagerstege LS1 bis LS5 auf, wobei die Zahl der Lagerstege für die Erfindung nicht entscheidend ist. Die Lagergasse LG befindet sich in einem (nicht näher gezeigten) Werkstück, beispielsweise einem Zylinderkurbelgehäuse eines Verbrennungsmotors. Das Werkzeug 10 kann daher auch als ein Lagergassenwerkzeug oder allgemein als Bohrungsnachbearbeitungs- oder Bohrungsfeinbearbeitungswerkzeug bezeichnet werden.

Das mehrschneidige Zerspanungswerkzeug 10 weist einen um eine Dreh-oder Längsmittelachse 14 drehantreibbaren Grundkörper 12, der in der gezeigten Ausführungsform als eine Bohrstange ausgebildet ist, und eine am hinteren (in FIG. 1 rechten) Ende an den Grundkörper 12 axial anschließende werkzeugmaschinenspindelseitige Schnittstelle 13 auf, die in der gezeigten Ausführungsform einen sogenannten SK (Steilkegel)-Schaft hat. Alternativ dazu kann aber auch beispielsweise ein sogenannter HSK (Hohlschaftkegel)-Schaft oder dergleichen vorgesehen sein. An dem von der Schnittstelle 13 fernen, vorderen (in FIG. 1 linken) Ende weist der Grundkörper 12 einen zylindrischen Lagerabschnitt 15 auf, über den das Zerspanungswerkzeug 10 während der spanabhebenden Bearbeitung der in FIG. 2 bis 4 skizzierten Lagergasse LG eine Abstützung in radialer Richtung erfährt. Die FIG. 2 bis 4 zeigen, dass der Lagerabschnitt 15 in der gezeigten Ausführungsform über einen Mitnehmer 17, in der gezeigten Ausführungsform eine Passfeder, drehfest in einer Lagerbuchse 16 aufgenommen ist, die wiederum in einem (nicht gezeigten) Gegenlager in dem in FIG. 2 bis 4 skizzierten Werkstück drehbeweglich gelagert ist.

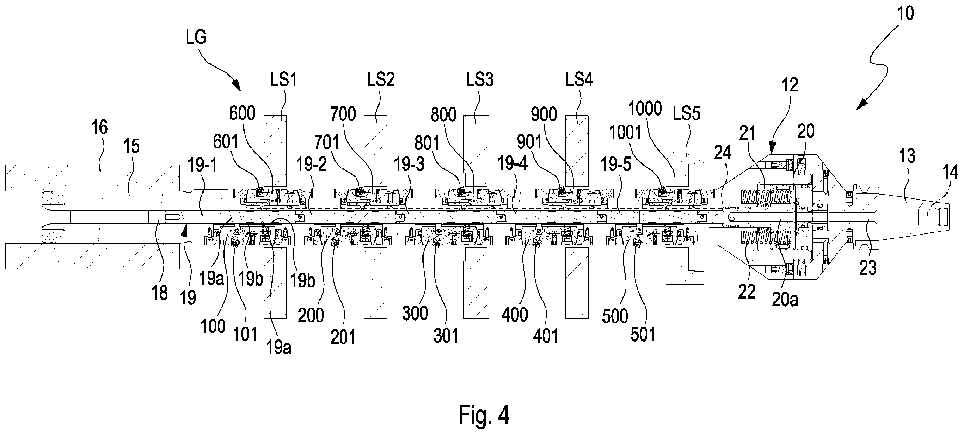

Man erkennt in FIG. 4 des Weiteren eine in einer mittig angeordneten axialen Durchgangsbohrung 18 im Grundkörper 12 längsverschiebbar angeordnete Stellstange 19. Die Stellstange 19 ist in der gezeigten Ausführungsform aus mehreren, im Besonderen einer der Zahl der Lagerstege LS1 bis LS5 entsprechenden Zahl von in axialer Richtung zug-/druckfest miteinander verbundenen Teilstücken 19-1 bis 19-5 zusammengesetzt und an ihrem in FIG. 4 rechten Ende zug-/druckfest mit einem Kolben 20 verbunden. Der Kolben 20 ist in einer zylindrischen Öffnung 21 im Grundkörper 12 abgedichtet aufgenommen und bei Druckbeaufschlagung gegen die Federkraft einer zwischen dem Kolben 20 und dem Boden der Öffnung 21 angeordneten Druckfeder 22 in FIG. 4 nach links axial verschiebbar. Man erkennt in FIG. 4, 11 und 12, dass ein im Grundkörper 12 ausgebildetes Kanalsystem 23, das in einen Druckraum 21a der zylindrischen Öffnung 21 führt und von dort aus - in der in FIG. 4 oder 11 gezeigten Ausgangsstellung des Kolbens 20 - über einen Kanal 20a im Kolben 20 mit in FIG. 1 und 2 gestrichelt angedeuteten Kanälen 24 verbunden ist, die bei der spanabhebenden Bearbeitung der Lagergasse LG die Schneiden des Zerspanungswerkzeugs 10 mit Kühlschmiermittel versorgen. In diesem Zustand ist ein freier Kühlschmiermittelfluss zu den Schneiden des Zerspanungswerkzeugs 12 möglich, sofern der Kühlschmiermitteleinspeisedruck eine vorgegebene Höhe nicht überschreitet. Wird der Kühlschmiermittel-Einspeisedruck über die vorgegebene Höhe hinaus erhöht, wird der Kolben 20 in die FIG. 12 gezeigte Hubstellung nach links verdrängt, wodurch die Verbindung des Kanals 20a im Kolben 20 mit den zu den Schneiden des Zerspanungswerkzeugs 10 führenden Kanälen 24 unterbrochen wird. Mit dem Kolben 20 wird des Weiteren die Stellstange 19 in Fig. 1 bis 4 nach links verschoben. Wird der Kühlschmiermittel-Einspeisedruck anschließend wieder bis unter die vorgegebene Höhe abgesenkt, werden der Kolben 20 und die Stellstange 19 durch die Federkraft der zwischen dem Kolben 20 und dem Grundkörper 12 angeordneten Druckfeder 22 wieder in FIG. 1 bis 4 nach rechts zurück gedrängt bzw. verschoben. In der gezeigten Ausführungsform findet der freie Kühlschmiermittelfluss zu den Schneiden des Zerspanungswerkzeugs 12 beispielsweise bei 5 bar statt, während die axiale Verschiebung der Stellstange 19 beispielsweise bei 20 bar eingeleitet wird. Die oben erwähnte vorgegebene Höhe des Kühlschmiermittel-Einspeisedrucks kann also beispielsweise in einem Bereich von 15 bis 20 bar liegen.

Jedes der Teilstücke 19-1 bis 19-5 der Stellstange 19 weist axial abwechselnd Zylinderabschnitte 19a und Kegelabschnitte 19b auf. Die axial aufeinanderfolgenden Zylinder- und Kegelabschnitte 19a, 19b jedes Teilstücks 19-1 bis 19-5 bilden dem jeweiligen Teilstück 19-1 bis 19-5 zugeordnete, jeweils aus einem Zylinderflächenabschnitt und einem Kegelflächenabschnitt zusammengesetzte Steuerflächen der Stellstange 19, an denen nachfolgend beschriebene Schneidenträger 100 bis 500 und 600 bis 1000 radial abgestützt sind.

Man erkennt in FIG. 1 bis 4, dass am Grundkörper 12 des mehrschneidigen Zerspanungswerkzeugs 10 in einer im Wesentlichen diametral gegenüberliegenden Anordnung zwei Schneidensätze mit einer der Zahl der zu bearbeitenden Lagerstege LS1 bis LS5 entsprechenden Zahl von Schneiden angeordnet sind, die jeweils von einem an einem Schneidenträger 100 bis 500 bzw. 600 bis 1000 gehaltenen Schneidelement 101 bis 501 bzw. 601 bis 1001 gebildet sind. In der gezeigten Ausführungsform sind die Schneidelemente 101 bis 501 und 601 bis 1001 von Schneidplatten, im Besonderen Wendeschneidplatten, gebildet. Jeder der beiden Schneidensätze weist in der gezeigten Ausführungsform daher fünf Schneidplatten 101 bis 501 bzw. 601 bis 1001 auf. Jede der Schneidplatten 101 bis 501 und 601 bis 1001 weist wenigstens eine geometrisch bestimmte Schneide zur spanabhebenden Bearbeitung einer zugeordneten Lagestelle LS1 bis LS5 auf. Die einem Schneidensatz zugeordneten Schneidplatten sind in vorgegebenen axialen Abständen entlang des Grundkörpers 12, d.h. parallel zur Dreh- oder Längsmittelachse 14, in einer Reihe angeordnet. Die axialen Abstände, in denen die Schneidplatten 101 bis 501 bzw. 601 bis 1001 angeordnet sind, entsprechen den Abständen, in denen die Lagerstege LS1 bis LS5 angeordnet sind. Die FIG. 1, 2 und 4 zeigen, dass die Schneidplatten 101 bis 501 gegenüber den Schneidplatten 601 bis 1001 um ein definiertes axiales Maß nach vorne (in FIG. 1, 2, 4 nach links) versetzt sind.

Jede der Schneidplatten 101 bis 501 und 601 bis 1001 ist im Besonderen über einen der oben erwähnten Schneidenträger 100 bis 500 bzw. 600 bis 1000, der in der gezeigten Ausführungsform als ein Kurzklemmhalter ausgebildet ist, am Grundkörper 12 des Zerspanungswerkzeugs 10 angeordnet. Jeder der Schneidenträger 100 bis 500 und 600 bis 1000 sitzt hierzu in einer sich in Längsrichtung des Grundkörpers 12 erstreckenden, außenumfangssseitig offenen Aufnahmetasche am Grundkörper 12 in einer Weise, dass er über die oben erwähnte Stellstange 19 radial ein- und aussteuerbar, d.h. radial nach innen oder außen verstellbar, ist.

In der gezeigten Ausführungsform dienen die auch als Semi-Finish-Schneidplatten bezeichneten Schneidplatten 601 bis 1001 zur Vorbearbeitung der Lagerstege LS1 bis LS5, während die auch als Finish-Schneidplatten bezeichneten Schneidplatten 101 bis 501 zur Endbearbeitung der Lagerstege LS1 bis LS5 auf einen vorgegebenen Nenndurchmesser dienen. In dem in FIG. 1 bis 4 gezeigten Zustand, in dem sämtliche Schneidenträger 100 bis 500 und 600 bis 1000 an einem zugeordneten Zylinderabschnitt 19a der Stellstange 19 abgestützt und damit radial ausgesteuert sind, können durch einen axialen Rückhub (in FIG. 1 bis 4 nach rechts) des drehangetriebenen Zerspanungswerkzeugs 10 alle Lagerstege LS1 bis LS5 synchron bearbeitet werden und zwar in der Weise, dass die Lagerstege LS1 bis LS5 zunächst mittels der Semi-Finish-Schneidplatten 601 bis 1001 vor- und anschließend mittels der Finish-Schneidplatten 101 bis 501 auf den vorgegebenen Nenndurchmesser fertigbearbeitet werden.

Für die Lagergassenbearbeitung ist es entscheidend, dass die Lagerstege LS1 bis LS5 im Durchmesser sehr präzise und mit einer hohen Fluchtgenauigkeit bearbeitet werden. Um dieser Forderung gerecht zu werden, müssen insbesondere die für die Endbearbeitung auf Nenndurchmesser verantwortlichen Finish-Schneidplatten 101 bis 501 relativ zur Dreh-oder Längsmittelachse 14 bzw. zum Grundkörper 12 des Zerspanungswerkzeugs 10 µm-genau auf ein jeweils vorgegebenes Nenndurchmessermaß justiert werden können. Das ist beispielsweise dann erforderlich, wenn das Zerspanungswerkzeugs 10 hergestellt wird, oder wenn ein Schneidenverschleiß eine Nachjustierung erforderlich macht.

Zu diesem Zweck sind bei dem erfindungsgemäßen Zerspanungswerkzeug 10 die für die Endbearbeitung der Lagerstege LS1 bis LS5 eingesetzten Schneidplatten 101 bis 501 an lagejustierbaren Schneidenträgern 100 bis 500 aufgenommen. Hierzu verfügt jeder Schneidenträger 100 bis 500 über eine Justiereinrichtung 120, über die er gegenüber dem Grundkörper 12, im Besonderen gegenüber der im Grundkörper 12 axial verschiebbar angeordneten Stellstange 19, µm-genau individuell justierbar ist, sowie eine von der Justiereinrichtung unabhängige Einstelleinrichtung 170, über die die an dem jeweiligen Schneidenträger 100 bis 500 gehaltene Schneidplatte 101 bis 501 gegenüber dem jeweiligen Schneidenträger 100 bis 500 radial einstellbar ist. Man erkennt in den FIG. 1 bis 4, dass die Schneidenträger 100 bis 500 alle den gleichen Aufbau aufweisen, so dass im Folgenden mit Hilfe der FIG. 13 bis 21 die Anordnung am Grundkörper 12, der Aufbau und die Funktionsweise sowie die erwähnte Justiereinrichtung und Einstelleinrichtung am Beispiel des vordersten Schneidenträgers 100 näher beschrieben werden.

Die FIG. 13 zeigt eine perspektivische Draufsicht eines vorderen Längenabschnitts des Zerspanungswerkzeugs 10 in einem größeren Maßstab; die FIG. 14 zeigt eine perspektivische Draufsicht eines Teils des vorderen Längenabschnitts mit dem Schneidenträger 100 in einem größeren Maßstab; FIG. 15 zeigt einen Längsschnitt des Teils in FIG. 14; FIG. 16 zeigt einen perspektivischen Querschnitt des Teils in FIG. 14; FIG. 17 zeigt den Querschnitt des Längenabschnittteils mit dem Schneidenträger 100; FIG. 18 zeigt einen Querschnitt gemäß "XVIII-XVIII" in FIG. 15 in einem größeren Maßstab; FIG. 19 zeigt einen Querschnitt gemäß "XIX-XIX" in FIG. 15 in einem größeren Maßstab; FIG. 20 zeigt eine perspektivische Draufsicht des Schneidenträgers 100; und FIG. 21 zeigt eine perspektivische Rückansicht des Schneidenträgers 100.

Der Schneidenträger 100, der in der Ausführungsform als ein Kurzklemmhalter ausgebildet ist, weist im Wesentlichen einen Trägerkörper 110, die am Trägerkörper 110 gehaltene Schneidplatte 101, die oben erwähnte Einstelleinrichtung 170 zur Lageeinstellung der Schneidplatte 101 relativ zum Trägerkörper 110, die oben erwähnte Justiereinrichtung 120 zur Lagejustierung des Schneidenträgers 100 relativ zum Grundkörper 12 bzw. zur Stellstange 19, eine Spannschraube 140, eine Druckfeder 145, einen Schwenkbolzen 150 und eine Sicherungsschraube 160 auf.

Man erkennt in FIG. 14 bis 21, dass der Trägerkörper 110 aus einem prismatischen oder quaderförmigen Block gefertigt ist, der in einer sich in Richtung der Dreh-oder Längsmittelachse 14 des Grundkörpers 12 erstreckenden prismatischen oder quaderförmigen Aufnahmetasche 12a im Grundkörper 12 aufgenommen ist. Die Aufnahmetasche 12a ist von zwei zur Dreh- oder Längsmittelachse 14 parallelen ebenen Seitenflächen 12a1, 12a2, einer achsparallelen ebenen Bodenfläche 12a3 sowie einer vorderen und hinteren ebenen Stirnfläche 12a4 bzw. 12a5 begrenzt. Man erkennt in FIG. 19, dass die Aufnahmetasche 12a in einem radialen Abstand zu der zur Dreh- oder Längsmittelachse 14 koaxialen Stellstange 19 ausgebildet ist. Bezogen auf eine die Dreh- oder Längsmittelachse 14 enthaltende Längsmittelebene, in der auch die Achsen der Spannschraube 140 und der Sicherungsschraube 160 liegen, ist die Aufnahmetasche 12a im Querschnitt im Wesentlichen symmetrisch geformt.

Die Außenumfangsfläche 1101 des Trägerkörpers 110 ist analog der Zylindermantelfläche 12c des Grundkörpers 12 zylindrisch ausgebildet. Die beiden ebenen Seitenflächen 1102, 1103 des Trägerkörpers verlaufen parallel zur Dreh- oder Längsmittelachse 14 und liegen mit einer definierten Spielpassung an den gegenüberliegenden Seitenflächen 12a1 bzw. 12a2 der Aufnahmetasche 12a an. Die ebene Unterfläche 1104 ist einem ausreichenden Abstand zur Bodenfläche 12a3 der Aufnahmetasche 12a gehalten, um die Schwenkbeweglichkeit des Schneidenträgers 100 um eine durch den Schwenkbolzen 150 definierte Schwenkachse 151 sicherzustellen. Die am Schneidenträger 100 gehaltene Schneidplatte 101 kann über eine außenumfangsseitig offene Einbuchtung 111 in einem Sitz 112 im Trägerkörper 100 montiert und eingestellt werden. Der Sitz 112 ist in axialer Richtung von zwei Seitenflächen 112a, 112b begrenzt, zwischen denen die Schneidplatte 101 axial formschlüssig aufgenommen ist. Die Schneidplatte 101 ist in einer dem Fachmann bekannten, üblichen Art und Weise mittels einer Klemmschraube 113, die die Schneidplatte 101 gegen eine Sitzfläche 112c drückt, am Trägerkörper 110 gehalten. Zur radialen Ausrichtung der Schneidplatte 101 relativ zum Trägerkörper 110 weist der Schneidenträger 100 eine integrierte Einstelleinrichtung 170 auf, die in der gezeigten Ausführungsform aus einem nicht näher beschriebenen Exzenterbolzen-, Gewindekeil- oder Kegelschrauben-Verstellmechanismus gebildet ist, der mit der im Sitz 112 aufgenommenen Schneidplatte 101 zusammenwirkt, wie der Fachmann aus den FIG. 14, 15 und 20 erkennt.

In der gezeigten Ausführungsform ist der Schneidenträger 100 in der Aufnahmetasche 12a des Grundkörpers 12 abgedichtet aufgenommen. Hierzu ist der Trägerkörper 110 mit seinen Stirnseiten 1105, 1106 axial zwischen zwei am Grundkörper 12 durch Verschraubung 182, 192 festgelegte Einfassungen 180, 190 angeordnet, die jeweils eine an der Stirnseite 1105 bzw. 1106 anstehende Dichtung 181 bzw. 191 halten. Man erkennt in FIG. 15, dass die Stirnseiten 1105, 1106 in Übereinstimmung mit den gegenüberliegenden Seitenflächen 1801 bzw. 1901 der Einfassungen 180, 190 rund geformt sind, um das für die Schwenkbarkeit des Schneidenträgers 100 erforderliche Spiel gering halten und durch die Dichtungen 181, 191 abdichten zu können.

Wie bereits angegeben, ist der Schneidenträger 100 in der Aufnahmetasche 12a über den am Grundkörper 12 gelagerten Schwenkbolzen 150 um die Schwenkachse 151 schwenkbeweglich aufgenommen. Der den Trägerkörper 110 durchdringende Schwenkbolzen 150 erstreckt sich in eine Richtung quer zur Dreh- oder Längsmittelachse 14 (vgl. FIG. 19) und ist beidseits des Trägerkörpers 110 in nicht näher bezeichneten Achsbohrungen im Grundkörper 12 angeordnet. Der die Schwenkachse 151 definierende Schwenkbolzen 150 ist durch eine außenumfangsseitig zugängliche, im Trägerkörper 110 verschraubte Sicherungsschraube 160 am Trägerkörper 110 verliersicher befestigt. Der Schneidenträger 100 ist damit in der Aufnahmetasche 12a um die quer zur Dreh- oder Längsmittelachse 14 ausgerichtete Schwenkachse 151 wippenartig schwenkbar.

Man erkennt in FIG. 15, dass die Schwenkachse 151 in der hinteren Hälfte des Trägerkörpers 110 liegt. Der Trägerkörper 110 bildet damit einen zweiseitigen Hebel, wobei die Justiereinrichtung 120 auf der in FIG. 15 linken, längeren Hebelseite und die Spannschraube 140 auf der rechten, kürzeren Hebelseite angeordnet ist.

Die FIG. 18 zeigt einen Querschnitt durch die Spannschraube 140. Zu erkennen ist, dass die Spannschraube 140 ebenso wie die bereits erwähnte Sicherungsschraube 160 (vgl. Fig. 19) im Wesentlichen radial in den im Trägerkörper 110 eingeschraubt und außenumfangsseitig betätigbar sind. Zu erkennen des Weiteren, dass sich die Spannschraube 140 über die Druckfeder 145 an der Bodenfläche 12a3 der Aufnahmetasche 12a des Grundkörpers 12 abstützt. Spannschraubenseitig ist die Druckfeder 120 am Grund einer Bohrung 141 abgestützt. Die Druckfeder 145 übt über die Spannschraube 140 auf den Schneidenträger 100 eine Federkraft dergestalt aus, dass der Schneidenträger 100 in FIG. 15 im Gegenuhrzeigersinn um die Schwenkachse 151 verschwenkt wird.

Die auf der anderen Hebelseite des Trägerkörpers 110 angeordnete Justiereinrichtung 120 ist in FIG. 15 bis 17 gut zu erkennen. Man erkennt, dass die Justiereinrichtung 120 vollständig in den Halterkörper 110 integriert ist. Die Justiereinrichtung 120 weist eine Differentialgewindespindel 122, eine Gewindehülse 124, eine Gewindebuchse 126, ein Stellelement 128 und ein Betätigungselement 130 auf. Die Gewindehülse 124 ist im Trägerkörper 110 in einer sich quer zur Dreh- oder Längsmittelachse 14 erstreckenden Führungsausnehmung 1108 verschiebbar aufgenommen. Hierzu ist die Gewindehülse 124 durch einen Formschluss in der Querschnittskontur in der Führungsausnehmung 1108 bezüglich der Spindelachse 1221 drehfest angeordnet. In der gezeigten Ausführungsform wird der Formschluss durch eine im Querschnitt im Wesentlichen rechteckig geformte Führungsausnehmung 1108 und eine dementsprechend im Querschnitt im Wesentlichen rechteckig geformte Gewindehülse 124 erreicht (vgl. FIG. 21).

Die Gewindebuchse 126 ist an dem in Fig. 17 linken Ende der Führungsausnehmung 1108 des Trägerkörpers 110 durch eine Presspassung, Löten, Kleben oder dergleichen dreh- und axialfest verankert.

Die Differentialgewindespindel 122 weist einen ersten Gewindeabschnitt 122a und einen zweiten Gewindeabschnitt 122b auf. Der erste Gewindeabschnitt 122a ist mit einer Gewindebohrung 124a der Gewindehülse 124 verschraubt, während der zweite Gewindeabschnitt 122b mit einer Gewindebohrung 126a der Gewindebuchse 126 verschraubt ist. Der erste Gewindeabschnitt 122a und zweite Gewindeabschnitt 122b haben ungleiche Gewindesteigungen (Ganghöhen), aber gleiche Gewinderichtungen (Gangrichtungen). Bei einer Drehbetätigung der Differentialgewindespindel 122 bewegt sich die Gewindehülse daher 124 in Richtung der Spindelachse 1221 daher um eine Strecke, die dem Steigungsunterschied der beiden Gewindeabschnitte 122a, 122b der Differentialgewindespindel 122 entspricht. Die Gewindesteigungen der Gewindeabschnitte 122a, 122b sind in dem gezeigten Ausführungsbeispiel so festgelegt, dass sich die Differentialgewindespindel 122 für die gewünschte Schneidenfeinjustierung im Bereich von 0,2 µm um 4 mm in Richtung der Spindelachse 1221 schraubt.

Zur Drehbetätigung ist die Differentialgewindespindel 122 einem Betätigungselement 130 drehfest, aber axial beweglich verbunden. Das Betätigungselement 130 ist in dem gezeigten Ausführungsbeispiel im Besonderen über einen im Wesentlichen quaderförmigen Halter 135, der mittels zweier Schrauben 135a, 135b in einer seitlichen Ausnehmung 112 am Trägerkörper 110 angeschraubt ist, am Trägerkörper 110 axialfest, aber drehbeweglich gehalten. Der Halter 135 weist eine mittige Durchgangsöffnung 136 auf, aus der ein Betätigungskopf 132 das Betätigungselement 130 seitlich herausragt. Ein Fußteil 133 des Betätigungselements 130 ist zwischen dem Halter 135 und einer die Ausnehmung 114 in Richtung der Spindelachse 1221 verlängernden Vertiefung 115 mit einem für die Drehbetätigung erforderlichen geringen Spiel angeordnet. Eine Drehbetätigung des Betätigungselements 130 kann über einen sogenannten (nicht gezeigten) Skalenschlüssel bewerkstelligt werden, wofür das Betätigungselement 130 ein an den Skalenschlüssel angepasstes Mehrkant- oder Mehrzahn-Mitnahmeprofil 131 aufweist.

Die FIG. 15 bis 17 zeigen, dass eine das Stellelement 128 bildende Nase der Gewindehülse 124 aus einer in die Führungsausnehmung 1108 mündenden Öffnung 1104a, die die Unterfläche 1104 des Trägerkörpers 110 durchdringt, und einen die Bodenfläche 12a3 der Aufnahmetasche 12a durchdringenden Durchbruch 12d im Grundkörper 12 in Richtung der Stellstange 19 auskragt. Das Stellelement 128, das in der gezeigten Ausführungsform mit der Gewindehülse 124 einstückig ausgebildet ist, weist an seiner von der Schneidplatte 101 abgewandten Stirnseite eine runde (vgl. FIG. 15) Keilfläche 128a auf, die in einem schiefen Winkel α zu der zur Spindelachse 1221 parallelen Verschieberichtung der Gewindehülse 124 bzw. der Spindelachse 1221 verläuft (vgl. FIG. 16 und 6). Bei einer Verdrehung der Differentialgewindespindel 122 wird das Stellelement 128 von der Gewindehülse 124 in eine zur Spindelachse 1221 parallele Verschieberichtung quer zur Dreh- oder Längsmittelachse 14 bzw. zur Stellstange 19 (in FIG. 17 von links nach rechts oder umgekehrt) verschoben.

Man erkennt in FIG. 15, dass das Stellelement 128 aufgrund der durch die Spannfeder 145 und die Spannschraube 140 auf den Trägerkörper 110 ausgeübten Federkraft an der Steuerfläche an der Stellstange 19 abgestützt ist und zwar - je nach der axialen Verschiebelage der Stellstange 19 - entweder an dem Zylinderflächenabschnitt 19a (wie in FIG. 15 gezeigt) oder an dem Kegelflächenabschnitt 19b der Stellstange 19. Die stirnseitige Keilfläche 128a des Stellelements 128 bildet mit der gegenüberliegenden, aus dem Zylinderflächenabschnitt 19a und dem Kegelflächenabschnitt 19b zusammengesetzten Steuerfläche der Stellstange 19 ein Keilflächengetriebe, das eine Verschwenkung des Schneidenträgers 100 um die Schwenkachse 151 bewirkt, wodurch sich die radiale Lage der Schneidplatte 101 relativ zur Dreh- oder Längsmittelachse 14 oder Stellstange 19 bzw. zum Grundkörper 12 ändert und eine gewünschte Feinjustierung des Schneidenträgers 100 ermöglicht wird. Die gezeigte Ausführungsform zeichnet sich durch einen Punktkontakt zwischen der stirnseitigen runden Keilfläche 128a und der ebenfalls runden Steuerfläche der Stellstange 19 aus. Der Punktkontakt gewährleistet eine besonders genaue Feinjustierung des Schneidenträgers 100.

Durch die mit der Gewindehülse 124 einstückige Ausbildung ist das Stellelement 128 in seiner Auskragrichtung Y (vgl. FIG. 15 bis 17) relativ zum Trägerkörper 110 im Wesentlichen lagefest angeordnet. Des Weiteren stimmt die Verschieberichtung X (vgl. FIG. 15 und 6) des Stellelements 128 mit der Verschieberichtung der Gewindehülse 124 oder der Richtung der Spindelachse 1221 überein, während die Auskragrichtung Y des Stellelements 128 senkrecht zur Verschieberichtung X des Stellelements 128 und der Gewindehülse 124 sowie senkrecht zur Richtung der Spindelachse 1221 ist.

Man erkennt in FIG. 15 bis 17 des Weiteren, dass die Schwenkachse 151 des Schneidenträgers 100 im Wesentlichen parallel zur Verschieberichtung des Stellelements 128 des Schneidenträgers 100 ausgerichtet ist.

Der Schneidenträger 100 ist somit in radialer Richtung an der im Grundkörper 12 des Zerspanungswerkzeugs 10 axial verschiebbar angeordneten Stellstange 19 abgestützt und über die Stellstange 19 gegen die Federkraft der Spannschraube 482 durch Verschwenkung um die Schwenkachse 475 relativ zum Grundkörper 12 radial aus- bzw. einklappbar bzw. aus- und einsteuerbar. In der gezeigten Ausführungsform ist der Schneidenträger 100 im Besonderen zwischen einer eingesteuerten Schwenklage, in der die am Schneidenträger 100 gehaltene Schneidplate 101 auf einem minimalen Durchmesser liegt, und einer ausgesteuerten Schwenklage, in der die Schneidplatte 101 auf einem maximalen Durchmesser, d.h. auf dem vorgegebenen Nenndurchmessermaß über dem Außenumfang des Grundkörpers 12, liegt, verstellbar. Die ausgesteuerte Schwenklage des Schneidenträgers 100 ist dann erreicht, wenn das vom Schneidenträger 100 auskragende Stellelement 128 an dem Zylinderflächenabschnitt 19a der Stellstange anliegt, während die eingesteuerte Schwenklage des Schneidenträgers 100 erreicht ist, wenn das vom Schneidenträger 100 auskragende Stellelement 128 an dem Kegelflächenabschnitt 19b der Stellstange 19 anliegt.

In jeder der beiden Schwenklagen ist dank der die Differentialgewindespindel 122 aufweisenden Justiereinrichtung 120, beispielswese zum Ausgleich eines Schneidenverschleißes, eine Schneidenfeinjustierung des Schneidenträgers 100 im µm-Bereich möglich. Durch die im Trägerkörper 110 aufgenommene Justiereinrichtung 120 kann eine Verschiebung des Stellelements 128 in eine Richtung quer zur Stellstange 19 bewirkt werden, um den Schneidenträger 100 mit der Schneidplatte 101 gegenüber der Stellstange 19 bzw. dem Grundkörper 12 in radialer Richtung zu verschwenken. Eine Schneidenjustierung erfolgt zweckmäßig dann, wenn das vom Schneidenträger 100 auskragende Stellelement 128 an dem Zylinderflächenabschnitt 19a der Stellstange anliegt, weil die Schneidplatte 101 in der dadurch erhaltenen Schwenklage auf einem maximalen Durchmesser liegt. Durch das Zusammenwirken der in den Schneidenträger 100 integrierten Justiereinrichtung 120 mit dem ebenfalls im Schneidenträger 100 verschiebbar geführten Stellelement 128 wird also eine Schneidenfeinjustierung durch eine Verstellung des gesamten Schneidenträger 100 ermöglicht. Davon unabhängig verfügt der Schneidenträger 100 dank der oben erwähnten Einstelleinrichtung 170 über eine weitere Möglichkeit zur Lageeinstellung der Schneidplatte 101 gegenüber dem Trägerkörper 110. Für eine Schneidenverstellung ergeben sich also drei voneinander unabhängige Möglichkeiten.

Durch die Integration der Justiereinrichtung 120 in den Trägerkörper 110 wird ein kompakt aufgebauter Schneidenträger 100 erhalten, der sich mit der integrierten Justiereinrichtung 120 und dem Stellelement 128 als eine austauschbare Komponente handhaben und am Grundkörper 12 des Zerspanungswerkzeugs 10 anbringen lässt.

Die oben erwähnten Schneidenträger 600 bis 1000, die lediglich für die Vorbearbeitung der Lagerstege LS1 bis LS5 eingesetzt werden, weisen in der gezeigten Ausführungsform eine mit der Justiereinrichtung 120 vergleichbare Justiereinrichtung nicht auf. Wie man in FIG. 4 erkennt, sind aber auch die Schneidenträger 600 bis 1000 jeweils über ein nicht näher erläutertes Stellelement an einer zugeordneten, aus einem Zylinderflächenabschnitt 19a und einem Kegelflächenabschnitt 19b zusammengesetzten Steuerfläche der Stellstange 19 in radialer Richtung abgestützt und zwar in der Weise, dass analog zu den Schneidenträgern 100 bis 500 durch die Stellstange 19 synchron radial aus- und einklappbar bzw. radial aus- und einsteuerbar sind. Durch eine axiale Verschiebung der Stellstange 19 werden somit alle Schneidenträger, d.h. die Schneidenträger 100 bis 500 und die Schneidenträger 600 bis 1000, synchron radial ein- oder ausgesteuert.

Mit dem oben beschriebenen Lagergassenwerkzeug 10 lässt sich die in FIG. 2 bis 4 skizzierte Lagergasse LG daher gemäß den im Folgenden näher beschriebenen Verfahrensschritten auf einen vorgegebenen Nenndurchmesser spanabhebend bearbeiten:

### 1. Positionieren des Zerspanungswerkzeugs außerhalb der Lagergasse

Zunächst wird das Zerspanungswerkzeug 10 außerhalb, d.h. in FIG. 2 bis 4 rechts vor, der Lagergasse LG, so positioniert, dass die Dreh- oder Längsmittelachse 14 mit der Achse der Lagergasse LG fluchtet. Das Zerspanungswerkzeug 10 dreht sich dabei noch nicht. Alle Schneidenträger 100 bis 1000 sind ausgesteuert, wie es in FIG. 1 gezeigt ist.

### 2. Einsteuern (Einklappen bzw. nach innen Verstellen) aller Schneidenträger

In dieser Ausgangsposition wird in den Druckraum 21a der den Kolben 20 aufnehmenden zylindrischen Öffnung 21 im Grundkörper 12 Kühlschmiermittel mit einem Druck von beispielsweise 20 bar eingespeist, wodurch der Kolben 20 und mit dem Kolben 20 die Stellstange 19 gegen die Federkraft der Druckfeder 22 in FIG. 4 nach links verdrängt bzw. verschoben werden, bis der Kolben 20 gegen den Boden der zylindrischen Öffnung 21 anschlägt, wie es in FIG. 12 gezeigt ist. In diesem Zustand ist die Kühlschmiermittelverbindung zu den zu den Schneiden des Zerspanungswerkzeugs 10 führenden Kanälen 24 unterbrochen. Durch die Verschiebung der Stellstange 19 - in FIG. 4 nach links - verschiebt sich der Kontaktpunkt zwischen jedem der Schneidenträger 100 bis 500 und 600 bis 1000 und der zugeordneten Steuerfläche der Stellstange 19 von dem Zylinderflächenabschnitt 19a hin zu dem Kegelflächenabschnitt 19b, wodurch alle Schneidenträger durch Verschwenkung um die jeweilige Schwenkachse in radialer Richtung synchron eingesteuert werden. Die an den Schneidenträgern gehaltenen Schneidplatten werden dadurch in radialer Richtung nach innen auf ein Durchmessermaß verstellt, das kleiner ist als ein dem vorgegebenen Nenndurchmesser entsprechendes Nenndurchmessermaß.

Das Durchmessermaß, auf dem sich die Schneidplatten in dem eingesteuerten Zustand befinden, kann größer, gleich oder kleiner sein als der Außendurchmesser des Grundkörpers 12.

Es soll hervorgehoben werden, dass Gegenstand einer separaten Erfindung eine Ausführungsform des Zerspanungswerkzeugs ist, bei der dieses Durchmessermaß der Schneidplatten im eingesteuerten Zustand größer ist als der Außendurchmesser des Grundkörpers, wobei in diesem Fall auch die vorstehend beschriebene Feinjustierung durch die Justiereinrichtung 120 für die Schneidenträger 100 bis 500 entfallen kann. In diesem Fall werden die Schneidenträger nicht über ein mit der Justiereinrichtung zusammenwirkendes Stellelement, sondern über ein mit dem Trägerkörper direkt zusammenwirkendes Stellelement von der Stellstange 19 angesteuert. Das so abgewandelte Zerspanungswerkzeug kann - abgesehen von der Justiereinrichtung je Schneidenträger - in allen weiteren konstruktiven und funktionalen Aspekten identisch mit der vorstehend beschriebenen Ausführungsform sowie den später beschriebenen Abwandlungen des Zerspanungswerkzeugs ausgebildet sein.

### 3. Einfahren des Zerspanungswerkzeugs in die Lagergasse

In diesem Zustand wird das Zerspanungswerkzeug in Vorschubrichtung (in FIG. 2 bis 4 von rechts nach links) geradlinig entlang der Dreh- oder Längsmittelachse 14 in die Lagergasse LG eingefahren, beispielsweise bis in die in FIG. 2 bis 4 gezeigte axiale Position, in der sich die Schneidplatten 101 bis 1001 - in Vorschubrichtung gesehen - hinter dem jeweils zu bearbeitenden Lagersteg LS1 bzw. LS5 befinden. Wie es in FIG. 2 bis 4 gezeigt sich, befinden sich die Schneidplatten 101 und 601 dann hinter (in FIG. 2 bis 4 links) des Lagerstegs LS1, die Schneidplatten 201 und 701 hinter (in FIG. 2 bis 4 links) des Lagerstegs LS2 bzw. zwischen den Lagerstegen LS1 und LS2, die Schneidplatten 301 und 801 hinter (in FIG. 2 bis 4 links) des Lagerstegs L32 bzw. zwischen den Lagerstegen LS2 und LS3, die Schneidplatten 401 und 901 hinter (in FIG. 2 bis 4 links) des Lagerstegs LS4 bzw. zwischen den Lagerstegen LS3 und LS4, und die Schneidplatten 501 und 1001 hinter (in FIG. 2 bis 4 links) des Lagerstegs LS5 bzw. zwischen den Lagerstegen LS4 und LS5.

### 4. Aussteuern (Ausklappen bzw. nach außen Verstellen) aller Schneidenträger

In diesem Zustand wird der Kühlschmiermitteldruck auf beispielsweise 5 bar abgesenkt, wodurch der Kolben 20 und mit dem Kolben 20 die Stellstange 19 aufgrund der Federkraft der Druckfeder 22 wieder in die in FIG. 11 gezeigte Ausgansstellung verdrängt oder verschoben werden. Durch die Verschiebung der Stellstange 19 - in FIG. 4 nach links - verschiebt sich der Kontaktpunkt zwischen jedem der Schneidenträger 100 bis 1000 und der zugeordneten Steuerfläche der Stellstange 19 von dem Kegelflächenabschnitt 19b hin zu dem Zylinderflächenabschnitt 19a, wodurch alle Schneidenträger 100 bis 1000 durch Verschwenkung um die jeweilige Schwenkachse in radialer Richtung synchron wieder ausgesteuert werden. Die an den Schneidenträgern 100 bis 1000 gehaltenen Schneidplatten 101 bis 1001 werden dadurch in radialer Richtung wieder nach außen auf das vorgegebene Nenndurchmessermaß verstellt. Gleichzeitig wird die Kühlschmiermittelverbindung zwischen dem durch den Kolben 20 führenden Kanal 20 und den zu den Schneiden des Zerspanungswerkzeugs 10 führenden Kanälen 24 wieder hergestellt, wodurch die Schneiden mit Kühlschmittel versorgt werden.

### 5. Bearbeiten der Lagerstege

In diesem Zustand wird das Zerspanungswerkzeug 10 drehangetrieben und gegensinnig zur Vorschubrichtung (d.h. in FIG. 2 bis 4 von links nach rechts) verfahren, wodurch die Schneidplatten die jeweils zu bearbeitende Lagersteg spababhebend bearbeiten. Das Zerspanungswerkzeug 10 wird dabei im Besonderen nur soweit verfahren, dass sich die Schneidplatten 101 und 601 zwischen den Lagerstegen LS1 und LS2, die Schneidplatten 201 und 701 zwischen den Lagerstegen LS2 und LS3, die Schneidplatten 301 und 801 zwischen den Lagerstegen LS3 und LS4, die Schneidplatten 401 und 901 zwischen den Lagerstegen LS4 und LS5 und die Schneidplatten 501 und 1001 - in Vorschubrichtung gesehen - vor des Lagerstegs LS5 befinden. Durch das Verfahren des Zerspanungswerkzeugs 10 werden daher alle Lagerstege LS1 bis LS5 synchron bearbeitet und zwar zunächst mittels der Schneidplatten 601 bis 1001 vor- und anschließend mittels der Schneidplatten 101 bis 501 auf den vorgegebenen Nenndurchmesser fertigbearbeitet. Konkret bearbeiten die Schneidplatten 601 und 101 die Lagersteg LS1, die Schneidplatten 701 und 201 die Lagersteg LS2, die Schneidplatten 801 und 301 die Lagersteg LS3, die Schneidplatten 901 und 401 die Lagersteg LS4 und die Schneidplatten 1001 und 501 die Lagerstege LS5.

### 6. Einsteuern aller Schneidenträger

In diesem Zustand, in dem das Zerspanungswerkzeug 10 immer noch in dem Werkstück eingefahren ist, aber die Lagerstege LS1 bis LS5 bereits auf den vorgegebenen Nenndurchmesser fertigbearbeitet sind, wird der Drehantrieb des Zerspanungswerkzeugs 10 gestoppt. Nach einer kurzen Verweildauer werden analog zu der für die Ausgangsposition beschriebenen Vorgehensweise durch Erhöhung des Kühlschmiermitteldrucks alle Schneidenträger 100 bis 1000 wieder synchron eingesteuert, wodurch die an den Schneidenträgern 100 bis 1000 gehaltenen Schneidplatten 101 bis 1001 wieder in radialer Richtung nach innen auf ein Durchmessermaß verstellt werden, das kleiner ist als das dem vorgegebenen Nenndurchmesser entsprechende Nenndurchmessermaß.

### 7. Ausfahren des Zerspanungswerkzeugs aus der Lagergasse

In diesem Zustand wird das Zerspanungswerkzeug 10 wieder geradlinig entlang der Dreh- oder Längsmittelachse 14 vollständiger aus der Lagergasse LG herausgefahren. Danach wird die Kühlschmiermittelzufuhr gestoppt, wodurch alle Schneidenträger 100 bis 1000 wieder synchron in den in FIG. 1 gezeigten Zustand radial ausgesteuert werden.

### 8. Messen der bearbeiteten Bohrungsdurchmesser und ggf. Nachjustieren

An das oben beschriebene Zerspanungsverfahren anschließend werden die bearbeiteten Bohrungsdurchmesser aller Lagerstege LS1 bis LS5 auf Nenndurchmessermaßhaltigkeit geprüft. Bei einer beispielsweise verschleißbedingten Abweichung von dem vorgegebenen Nenndurchmesser wird derjenige der Schneidenträger 100 bis 500, der eine dem vorgegebenen Nenndurchmesser nicht mehr genügende Lagersteg bearbeitet hat, durch Betätigung der jeweiligen Justiereinrichtung individuell nachjustiert. Wird also beispielsweise an des Lagerstegs LS4 eine Abweichung von dem vorgegebenen Nenndurchmesser nach oben oder unten festgestellt, so wird die für die Endbearbeitung auf den Nenndurchmesser zuständige Schneidplatte 401 über die in den Schneidenträger 400 integrierte Justiereinrichtung nachjustiert. Die Nachjustierung auf das gewünschte Nenndurchmessermaß ist dabei in beide Richtungen möglich. Dabei kann das Zerspanungswerkzeug 12 an der (nicht gezeigten) Werkzeugmaschinenspindel angekuppelt bleiben. Dank der in die Schneidenträger integrierten, oben beschriebenen Justiereinrichtungen lassen sich daher alle Schneidenträger bei Bedarf individuell nachjustieren und zwar ohne, dass das Zerspanungswerkzeug von der Werkzeugmaschinenspindel getrennt werden müsste. Damit lassen sich Maßschwankungen vermeiden, die auf den Wechsel oder Aubau des Zerspanungswerkzeugs 12 zurückgehen könnten.

Selbstverständlich sind Abwandlungen von dem zuvor beschriebenen Ausführungsbeispiel möglich, ohne die durch die Ansprüche definierte Erfindung zu verlassen.

In der gezeigten Ausführungsform ist das Stellelement 128 integraler Teil der Gewindehülse 124. Wird die Gewindehülse 124 durch die Differentialgewindespindel 122 in der Führungsausnehmung 1108 verschoben, nimmt die Gewindehülse 124 das Stellelement 128 daher in der gleichen Richtung X mit. Zur Schneidenjustierung bewegt sich das Stellelement 128 daher in eine Richtung X quer zu seiner Auskragrichtung Y (vgl. FIG. 17), d.h. in Verschieberichtung X der Gewindehülse 124 bzw. in Richtung der Spindelachse 1221. In seiner Auskragrichtung Y bewegt sich das Stellelement 128 jedoch nicht, d.h. das Stellelement 128 ist in seiner Auskragrichtung Y im Trägerkörper 110 fest angeordnet. Das muss aber nicht so sein. In einer abgewandelten Ausführungsform kann das Stellelement von der Gewindehülse getrennt und mit der Gewindehülse über eine in einem schiefen Winkel zu seiner Auskragrichtung ausgerichtete Flächenpaarung verbunden sein, die in FIG. 15 durch Strichelung angedeutet ist, wodurch sich zwischen der Gewindehülse und dem Stellelement ein weiteres Keilflächengetriebe ergibt. In diesem Fall kann das Stellelement im Trägerkörper in Verschieberichtung der Gewindehülse bzw. in Richtung der Spindelachse fest angeordnet und in seiner Auskragrichtung verstellbar sein. Hierzu kann es sinnvoll sein, den Verstellweg des Stellelements in Auskragrichtung durch geeignete Maßnahmen, z.B. Anschläge, zu begrenzen, um zu verhindern, dass das Stellelement aus dem Trägerkörper herausfällt, wenn der Schneidenträger vom Grundkörper abgenommen wird.

In der gezeigten Ausführungsform ist das Stellelement des Weiteren unmittelbar an der Stellstange abgestützt. Auch das muss nicht so sein. Zwischen dem schneidenträgerseitigen Stellelement und der grundkörperseitigen Stellstange kann wenigstens ein weiteres druckübertragendes Element angeordnet sein.

In der gezeigten Ausführungsform stützt sich jeder Schneidenträger an der im Grundkörper des Zerspanungswerkzeugs axial verschiebbar geführten Stellstange ab. Auch das muss nicht so sein. Wenn der Zerspanungswerkzeug über keine Stellstange verfügt, kann das schneidenträgerseitige Stellelement unmittelbar oder mittelbar an einer grundkörperseitigen Steuerfläche, beispielsweise an der Bodenfläche einer Aufnahmetasche abgestützt sein.

In der gezeigten Ausführungsform trägt jeder Schneidenträger genau eine Schneidplatte. Die oder ausgewählte Schneidenträger können wenigstens eine weitere Schneidplatte tragen, die - in axialer Richtung des Zerspanungswerkzeugs gesehen - beispielsweise auf Höhe der Schwenkachse des Schneidenträgers angeordnet ist. Die Lage der so angeordneten weiteren Schneidplatte wäre dann von einer mittels der Justiereinrichtung durchgeführten Schneidenjustierung im Wesentlichen unbeeinflusst und kann beispielsweise für die Erzeugung einer Fase oder dergleichen vorgesehen sein.

Des Weiteren können die Schneidenträger statt der oben angegebenen Schneidplatten andere Schneidelemente, beispielsweise Schneindeinsätze, Schneidleisten, etc. tragen.

In der gezeigten Ausführungsform ist jeder Schneidenträger in der Aufnahmetasche am Grundkörper um eine definierte Schwenkachse schwenkbar angeordnet. Abweichend davon kann jeder Schneidenträger aber auch in der Art eines elastisch verformbaren Biegebalkens ausgebildet und in einer Aufnahmetasche am Grundkörper eines Zerspanungswerkzeugs ohne Zwischenschaltung einer Druckfeder fest verschraubt sein. Analog zu der gezeigten Ausführungsform wird der Schneidenträger auch in diesem Fall dann über das aus dem Trägerkörper auskragende Stellelement an der Stellstange abgestützt.

In einer anderen Abwandlung kann jeder Schneidenträger in einer Aufnahmetasche am Grundkörper des eines Zerspanungswerkzeugs radial verschiebbar angeordnet sein. Analog zu der gezeigten Ausführungsform wird der Schneidenträger auch in diesem Fall dann über das aus dem Trägerkörper auskragende Stellelement an der Stellstange abgestützt.

Die oben verwendeten Angaben (in radialer Richtung) "ein-/aussteuerbar", "ein-/ausgesteuert"",ein-/aussteuern" etc. sind daher allgemein in dem Sinne zu verstehen, dass die Schneidenträger (in radialer Richtung) verstellbar sind, wobei die Verstellung durch Verschwenken (wie in der gezeigten Ausführungsform), durch elastische Verformung oder durch geradliniges Verschieben erfolgen kann.

In der gezeigten Ausführungsform erfolgt die axiale Verschiebung der Stellstange fluidisch, im Besonderen durch Beaufschlagung des an dem schnittstellenseitigen Ende befindlichen, über eine Druckfeder am Grundkörper abgestützten Kolbens mit Kühlschmiermitteldruck. Alternativ dazu kann eine axiale Verschiebung der Stellstange aber auch hydraulisch, pneumatisch oder elektromotorisch oder elektromagnetisch eingeleitet werden. Das Zerspanungswerkzeug kann zu diesem Zweck einen hydraulisch, pneumatisch, elektromotorisch oder elektromagnetisch arbeitenden Stellantrieb aufweisen, der die Stellstange axial antreibt.

In der gezeigten Ausführungsform hat die werkzeugmaschinenspindelseitige Schnittstelle einen SK (Steilkegel)-Schaft. Alternativ dazu kann aber auch ein sogenannter HSK (Hohlschaftkegel)-Schaft oder dergleichen vorgesehen sein.

In der gezeigten Ausführungsform wird das Zerspanungswerkzeug zur Lagergassenbearbeitung eingesetzt. Die Erfindung ist aber nicht auf diese Anwendung beschränkt. Ein erfindungsgemäßes Zerspanungswerkzeug findet Anwendung auch für eine Nachbearbeitung oder Feinbearbeitung einer Bohrung auf einen vorgegebenen Nenndurchmesser. Ein erfindungsgemäßes Zerspanungswerkzeug kann daher auch auf einem für die Bearbeitung einer Kolbenbohrung in einem Zylinderkurbelgehäuse oder dergleichen eingesetzt werden.

Des Weiteren sind in der gezeigten Ausführungsform mehrere Schneidenträger am Grundkörper des Zerspanungswerkzeugs in vorgegebenen axialen Abständen entlang des Grundkörpers in einer Reihe angeordnet. Die Anordnung in einer Reihe ist nicht zwingend. Die in den vorgegebenen axialen Abständen angeordneten Schneidenträger können in Umfangsrichtung voneinander versetzt, beispielsweise wendelförmig, angeordnet sein. Wenn die an der an der Stellstange den Schneidenträgern zugeordneten Steuerflächen - wie in der gezeigten Ausführungsform - jeweils von rotationssymmetrischen Flächen gebildet sind, also beispielsweise aus einem Kegelflächen- und einem Zylinderflächenabschnitt zusammengesetzt sind, bereitet die Abstützung der in Umfangsrichtung versetzt angeordneten Schneidenträger an der Stellstange kein Problem. Durch die in Umfangsrichtung versetzte Anordnung können je nach Einsatzgebiet des Zerspanungswerkzeugs die axialen Abstände zwischen den Schneidenträgern verkürzt oder am Grundkörper mehr Schneidenträger angeordnet werden. Die in Umfangsrichtung versetzte Anordnung bietet daher eine größere Gestaltungsflexibilität.

## Patentansprüche

1. Mehrschneidiges Zerspanungswerkzeug (10), mit
einem um eine Drehachse (14) drehantreibbaren Grundkörper (12),
mehreren, am Grundkörper (12) axial versetzt angeordneten Schneidenträgern (100, 200, 300, 400, 500, 600, 700, 800, 900, 1000), wobei jeder Schneidenträger (100, 200, 300, 400, 500, 600, 700, 800, 900, 1000) einen Trägerkörper (110) aufweist, der wenigstens ein Schneidelement (101, 201, 301, 401, 501, 601, 701, 801, 901, 1001) trägt, und
einer im Grundkörper (12) axial verschiebbar gelagerten Stellstange (19), an der die Schneidenträger (100, 200, 300, 400, 500, 600, 700, 800, 900, 1000) radial verstellbar abgestützt sind,
wobei jeder Schneidenträger (100, 200, 300, 400, 500, 600, 700, 800, 900, 1000) eine in den Trägerkörper (110) integrierte Justiereinrichtung (120) aufweist, die mit einem Stellelement (128) zusammenwirkt, das an der Stellstange (19) abgestützt ist,
**dadurch gekennzeichnet, dass**
das Stellelement (128) im Trägerkörper (110) verschiebbar geführt wird und vom Trägerkörper (110) radial auskragt.

2. Zerspanungswerkzeug (10) nach Anspruch 1, **dadurch gekennzeichnet, dass** das Stellelement (128) im Trägerkörper (110) quer zur Drehachse (14) des Grundkörpers (12) verschiebbar ist.

3. Zerspanungswerkzeug (10) nach Anspruch 1 oder 2, **dadurch gekennzeichnet, dass** das Stellelement (128) in seiner Auskragrichtung (Y) im Trägerkörper (110) lagefest angeordnet ist.

4. Zerspanungswerkzeug (10) nach einem der vorhergehenden Ansprüche, **dadurch gekennzeichnet, dass** das Stellelement (128) auf seiner der Stellstange (19) zugewandten Stirnseite eine in einem schiefen Winkel (α) zu seiner Verschieberichtung (X) liegende Keilfläche (128a) aufweist.

5. Zerspanungswerkzeug (10) nach einem der vorhergehenden Ansprüche, **dadurch gekennzeichnet, dass**
die Justiereinrichtung (120) eine Differentialgewindespindel (122) und eine Gewindehülse (124) aufweist,
die Gewindehülse (124) im Trägerkörper (110) verschiebbar geführt angeordnet ist und das Stellelement (128) mitnimmt, und
die Differentialgewindespindel (122) mit einem ersten Gewindeabschnitt (122a) in der Gewindehülse (124) und mit einem zweiten Gewindeabschnitt (122b) im Trägerkörper (110) verschraubt ist.

6. Zerspanungswerkzeug (10) nach Anspruch 5, **dadurch gekennzeichnet, dass** die Achse der Differentialgewindespindel (122) in Verschieberichtung (X) des Stellelements (128) ausgerichtet ist.

7. Zerspanungswerkzeug (10) nach Anspruch 5 oder 6, **dadurch gekennzeichnet, dass** die Gewindehülse (124) und das Stellelement (128) miteinander einstückig ausgebildet oder verbunden sind.

8. Zerspanungswerkzeug (10) nach einem der Ansprüche 5 bis 7, **dadurch gekennzeichnet, dass** die Gewindehülse (124) im Trägerkörper (110) formschlüssig drehfest angeordnet ist.

9. Zerspanungswerkzeug (10) nach einem der Ansprüche 5 bis 8, **dadurch gekennzeichnet, dass** die Differentialgewindespindel (122) mit einem am Trägerkörper (110) axialfest, aber drehbeweglich angeordneten Betätigungselement (130) drehfest, aber axial beweglich verbunden ist.

10. Zerspanungswerkzeug (10) nach einem der Ansprüche 5 bis 9, **dadurch gekennzeichnet, dass** der zweite Gewindeabschnitt (122b) der Differentialgewindespindel (122) in einer im Trägerkörper (110) festgelegten Gewindebuchse (126) verschraubt ist.

11. Zerspanungswerkzeug (10) nach einem der vorhergehenden Ansprüche, **dadurch gekennzeichnet, dass** jeder Schneidenträger (100, 200, 300, 400, 500, 600, 700, 800, 900, 1000) eine von der Justiereinrichtung (120) unabhängige, in den Trägerkörper (110) integrierte Einstelleinrichtung (170) zum Einstellen der Lage des vom Trägerkörper (110) getragenen Schneidelements (101, 201, 301, 401, 501, 601, 701, 801, 901, 1001) relativ zum Trägerkörper (110) aufweist.

12. Zerspanungswerkzeug (10) nach Anspruch 11, **dadurch gekennzeichnet, dass** die Einstelleinrichtung (170) einen Exzenterbolzen-, Gewindekeil- oder Kegelschrauben-Verstellmechanismus aufweist, der mit dem vom Trägerkörper (110) getragenen Schneidelement (101, 201, 301, 401, 501, 601, 701, 801, 901, 1001) zusammenwirkt.

13. Zerspanungswerkzeug (10) nach einem der vorhergehende Ansprüche, **dadurch gekennzeichnet, dass** der Trägerkörper (110) in der Art eines zweiseitigen Hebels ausgebildet und am Grundkörper (12) um eine quer zur Drehachse (14) ausgerichtete Schwenkachse (151) schwenkbar angeordnet ist, wobei die Justiereinrichtung (120) und eine Spannschraube (140) zum Spannen des Schneidenträgers (100, 200, 300, 400, 500, 600, 700, 800, 900, 1000) gegen den Grundkörper (12) auf verschiedenen Hebelseiten angeordnet sind.

14. Zerspanungswerkzeug (10) nach Anspruch 13, **dadurch gekennzeichnet, dass** die Spannschraube (140) über eine Druckfeder am Grundkörper (12) des Zerspanungswerkzeugs (10) abgestützt ist.

15. Zerspanungswerkzeug (10) nach einem der vorhergehenden Ansprüche, **dadurch gekennzeichnet, dass** jeder Schneidenträger (100, 200, 300, 400, 500, 600, 700, 800, 900, 1000) in einer zugeordneten außenumfangsseitig offenen Aufnahmetasche (12a) am Grundkörper (12) aufgenommen ist.

## Claims

1. A multi-blade machining tool (10), comprising
a base body (12), which can be rotationally driven about an axis of rotation (14),
a plurality of blade carriers (100, 200, 300, 400, 500, 600, 700, 800, 900, 1000), which are arranged axially offset on the base body (12), wherein each blade carrier (100, 200, 300, 400, 500, 600, 700, 800, 900, 1000) has a carrier body (110), which carries at least one cutting element (101, 201, 301, 401, 501, 601, 701, 801, 901, 1001), and
a control rod (19), which is mounted in an axially displaceable manner in the base body (12) and on which the blade carriers (100, 200, 300, 400, 500, 600, 700, 800, 900, 1000) are supported in a radially adjustable manner, wherein each blade carrier (100, 200, 300, 400, 500, 600, 700, 800, 900, 1000) has an adjusting mechanism (120), which is integrated in the carrier body (110) which interacts with a control element (128) which is supported on the control rod (19),
**characterized in that**
the control element (128) is displaceably guided in the carrier body (110) and radially projects from the carrier body (110).

2. The machining tool (10) according to claim 1, **characterized in that** the control element (128) is displaceable transversely to the axis of rotation (14) of the base body (12) in the carrier body (110).

3. The machining tool (10) according to claim 1 or 2, **characterized in that** the control element (128) is arranged in a positionally fixed manner in its direction of projection (Y) in the carrier body (110).

4. The machining tool (10) according to one of the preceding claims, **characterized in that**, on its front side facing the control rod (19), the control element (128) has a wedge surface (128a), which lies at an oblique angle (α) to its displacement direction (X).

5. The machining tool (10) according to one of the preceding claims, **characterized in that**
the adjusting mechanism (120) has a differential threaded spindle (122) and a threaded sleeve (124),
the threaded sleeve (124) is arranged so as to be displaceably guided in the carrier body (110), and
the differential threaded spindle (122) is screw-connected to a first threaded section (122a) in the carrier body (110) and to a second threaded section in the threaded sleeve (124).

6. The machining tool (10) according to claim 5, **characterized in that** the axis of the differential threaded spindle (122) is aligned in the displacement direction (X) of the control element (128).

7. The machining tool (10) according to claim 5 or 6, **characterized in that** the threaded sleeve (124) and the control element (128) are embodied or connected in one piece with one another.

8. The machining tool (10) according to one of claims 5 to 7, **characterized in that** the threaded sleeve (124) is arranged in the carrier body (110) in a rotationally fixed manner by means of a positive connection.

9. The machining tool (10) according to one of claims 5 to 8, **characterized in that** the differential threaded spindle (122) is connected in a rotationally fixed, but axially movable manner to an actuating element (130), which is arranged on the carrier body (110) in an axially fixed, but rotationally movable manner.

10. The machining tool (10) according to one of claims 5 to 9, **characterized in that** the second threaded section (122b) of the differential threaded spindle (122) is screwed into a threaded bushing (126) fixed in the carrier body (110).

11. The machining tool (10) according to one of the preceding claims, **characterized in that** each blade carrier (100, 200, 300, 400, 500, 600, 700, 800, 900, 1000) has a setting mechanism (170), which is independent of the adjusting mechanism (120) and is integrated into the carrier body (110), for setting the position of the cutting element (101, 201, 301, 401, 501, 601, 701, 801, 901, 1001) carried by the carrier body (110) relative to the carrier body (110).

12. The machining tool (10) according to claim 11, **characterized in that** the setting mechanism (170) has an eccentric bolt, threaded wedge or conical screw adjusting mechanism, which interacts with the cutting element (101, 201, 301, 401, 501, 601, 701, 801, 901, 1001) carried by the carrier body (110).

13. The machining tool (10) according to one of the preceding claims, **characterized in that** the carrier body (110) is embodied in the manner of a bilateral lever and is arranged on the base body (12) so as to be pivotable about a pivot axis (14), which is aligned transversely to the axis of rotation (14), wherein the adjusting mechanism (120) and a clamping screw (140) for tightening the blade carrier (100, 200, 300, 400, 500, 600, 700, 800, 900, 1000) against the base body (12) are arranged on different lever sides.

14. The machining tool (10) according to claim 13, **characterized in that** the clamping screw (140) is supported on the base body (12) of the machining tool (10) via a compression spring.

15. The machining tool (10) according to one of the preceding claims, **characterized in that** each blade carrier (100, 200, 300, 400, 500, 600, 700, 800, 900, 1000) is accommodated in an assigned receiving pocket (12a), which is open on the outer circumference, on the base body (12).

## Revendications

1. Outil d'usinage par enlèvement de copeaux multi-lames (10), comportant un corps de base (12) pouvant être entraîné en rotation autour d'un axe rotatif (14), plusieurs porte-lames (100, 200, 300, 400, 500, 600, 700, 800, 900, 1000) disposés de façon axialement décalée sur le corps de base (12), dans lequel chaque porte-lames (100, 200, 300, 400, 500, 600, 700, 800, 900, 1000) comporte un corps support (110) supportant au moins un élément lame (101, 201, 301, 401, 501, 601, 701, 801, 901, 1001), et
une tige de réglage (19) montée axialement coulissante dans le corps de base (12), sur laquelle s'appuient les porte-lames (100, 200, 300, 400, 500, 600, 700, 800, 900, 1000) de façon radialement mobile,
dans lequel chaque porte-lames (100, 200, 300, 400, 500, 600, 700, 800, 900, 1000) comporte un dispositif d'ajustage (120) intégré au corps support (110), lequel dispositif interagit avec un élément de réglage (128) qui s'appuie sur la tige de réglage (19),
**caractérisé en ce que** l'élément de réglage (128) est guidé de façon coulissante dans le corps support (110) et fait saillie radialement par rapport au corps support (110).

2. Outil d'usinage par enlèvement de copeaux (10) selon la revendication 1, **caractérisé en ce que** l'élément de réglage (128) est coulissant dans le corps support (110) transversalement à l'axe rotatif (14) du corps de base (12).

3. Outil d'usinage par enlèvement de copeaux (10) selon la revendication 1 ou 2, **caractérisé en ce que** l'élément de réglage (128) dans sa direction de dépassement (Y) est agencé dans une position fixe dans le corps support (110).

4. Outil d'usinage par enlèvement de copeaux (10) selon l'une quelconque des revendications précédentes, **caractérisé en ce que** l'élément de réglage (128) présente sur sa face frontale tournée vers la tige de réglage (19) une surface cunéiforme (128a) située à un angle oblique (a) par rapport à sa direction de coulissement (X).

5. Outil d'usinage par enlèvement de copeaux (10) selon l'une quelconque des revendications précédentes, **caractérisé en ce que**
le dispositif d'ajustage (120) comporte une vis de commande différentielle (122) et un manchon fileté (124),
le manchon fileté (124) est guidé coulissant dans le corps support (110) et entraîne l'élément de réglage (128), et
la vis de commande différentielle (122) est vissée avec un premier segment fileté (122a) dans le manchon fileté (124) et avec un second segment fileté (122b) dans le corps support (110).

6. Outil d'usinage par enlèvement de copeaux (10) selon la revendication 5, **caractérisé en ce que** l'axe de la vis de commande différentielle (122) est orienté dans la direction de coulissement (X) de l'élément de réglage (128).

7. Outil d'usinage par enlèvement de copeaux (10) selon la revendication 5 ou 6, **caractérisé en ce que** le manchon fileté (124) et l'élément de réglage (128) sont formés d'un seul tenant ou sont reliés l'un à l'autre.

8. Outil d'usinage par enlèvement de copeaux (10) selon l'une quelconque des revendications 5 à 7, **caractérisé en ce que** le manchon fileté (124) est agencé solidaire en rotation par complémentarité de forme dans le corps support (110).

9. Outil d'usinage par enlèvement de copeaux (10) selon l'une quelconque des revendications 5 à 8, **caractérisé en ce que** la vis de commande différentielle (122) est reliée solidaire en rotation, mais axialement mobile, à un élément de commande (130) agencé axialement fixe, mais mobile en rotation, sur le corps support (110).

10. Outil d'usinage par enlèvement de copeaux (10) selon l'une quelconque des revendications 5 à 9, **caractérisé en ce que** le second segment fileté (122b) de la vis de commande différentielle (122) est vissé dans une douille filetée (126) fixée dans le corps support (110).

11. Outil d'usinage par enlèvement de copeaux (10) selon l'une quelconque des revendications précédentes, **caractérisé en ce que** chaque porte-lames (100, 200, 300, 400, 500, 600, 700, 800, 900, 1000) comporte un moyen de réglage (170) intégré au corps support (110), indépendant du dispositif d'ajustage (120), destiné à régler la position de l'élément lame (101, 201, 301, 401, 501, 601, 701, 801, 901, 1001) supporté par le corps support (110), par rapport au corps support (110).

12. Outil d'usinage par enlèvement de copeaux (10) selon la revendication 11, **caractérisé en ce que** le moyen de réglage (170) comporte un mécanisme d'ajustage à boulon excentré, coin fileté ou vis conique qui coopère avec l'élément lame (101, 201, 301, 401, 501, 601, 701, 801, 901, 1001) supporté par le corps support (110).

13. Outil d'usinage par enlèvement de copeaux (10) selon l'une quelconque des revendications précédentes, **caractérisé en ce que** le corps support (110) est conçu sous la forme d'un levier à deux faces et est agencé pivotant sur le corps de base (12) autour d'un axe pivotant (151) orienté transversalement à l'axe rotatif (14), dans lequel le dispositif d'ajustage (120) et une vis de serrage (140) sont agencés sur différentes faces du levier à des fins de serrage du porte-lames (100, 200, 300, 400, 500, 600, 700, 800, 900, 1000) contre le corps de base (12).

14. Outil d'usinage par enlèvement de copeaux (10) selon la revendication 13, **caractérisé en ce que** la vis de serrage (140) s'appuie via un ressort de pression sur le corps de base (12) de l'outil d'usinage par enlèvement de copeaux (10).

15. Outil d'usinage par enlèvement de copeaux (10) selon l'une quelconque des revendications précédentes, **caractérisé en ce que** chaque porte-lames (100, 200, 300, 400, 500, 600, 700, 800, 900, 1000) est logé dans une poche de logement (12a) ouverte sur la périphérie externe associée sur le corps de base (12).
